(19) Europäisches Patentamt
European Patent Office
Office européen des brevets

(11) **EP 3 528 162 B1**

(12) **EUROPÄISCHE PATENTSCHRIFT**

(45) Veröffentlichungstag und Bekanntmachung des Hinweises auf die Patenterteilung:
**10.06.2020 Patentblatt 2020/24**

(51) Int Cl.:
*G06F 21/55* *(2013.01)*      *H04L 12/26* *(2006.01)*
*H04L 29/06* *(2006.01)*      *H04L 12/24* *(2006.01)*

(21) Anmeldenummer: **19153037.7**

(22) Anmeldetag: **22.01.2019**

(54) **VERFAHREN ZUR ERKENNUNG VON ANORMALEN BETRIEBSZUSTÄNDEN**

METHOD FOR RECOGNIZING ABNORMAL OPERATIONAL STATES

PROCÉDÉ DE DÉTECTION DES ÉTATS DE FONCTIONNEMENT ANORMAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2018 AT 501562018**

(43) Veröffentlichungstag der Anmeldung:
**21.08.2019 Patentblatt 2019/34**

(73) Patentinhaber: **AIT Austrian Institute of Technology GmbH**
**1210 Wien (AT)**

(72) Erfinder:
• **Landauer, Max**
  **1070 Wien (AT)**
• **Skopik, Florian**
  **2000 Stockerau (AT)**
• **Wurzenberger, Markus**
  **1090 Wien (AT)**

(74) Vertreter: **Wildhack & Jellinek**
**Patentanwälte**
**Landstraßer Hauptstraße 50**
**1030 Wien (AT)**

(56) Entgegenhaltungen:
EP-A1- 3 267 625      EP-A2- 2 828 753
US-A1- 2015 269 050      US-A1- 2017 344 415

**Beschreibung**

Die Erfindung betrifft ein Verfahren zur Detektion von anomalen Zuständen in einem Computernetzwerk gemäß dem Patentanspruch 1.

Aus dem Stand der Technik ist bekannt, Protokolldateien, die von unterschiedlichen Prozessen erstellt werden, daraufhin zu untersuchen, ob die in den Protokolldateien beschriebenen Vorgänge einen anomalen Zustand der Prozesse bzw. des Computernetzwerks darstellen, in dem diese Prozesse ablaufen.

Bei den vorstehend genannten Verfahren bestehen wesentliche Probleme, die üblicherweise in für Menschen lesbarer Form geschriebenen Protokolldateien auf bestimmte Muster hin zu analysieren, um somit Betriebszustände zu erkennen, die ungewöhnlich oder einzigartig sind und auf anomale Betriebszustände hindeuten. Aus dem Stand der Technik sind konkret einzelne Verfahren bekannt, die unterschiedliche untereinander zusammengehörige Zeilen aus Protokolldateien in Verbindung bringen und derart typische Muster oder Gruppen von Protokollzeilen mit ähnlichem Aufbau zu detektieren. Insbesondere ist ein derartiges Vorgehen aus dem österreichischen Patent 514215 bekannt.

Die Patente EP 3 267 625 und US 2017 / 344 415 offenbaren ebenfalls relevanten Stand der Technik.

Solche Vorgehensweisen zur Mustererkennung ermöglichen grundsätzlich das Auffinden von anomalen Zuständen in einem Computernetzwerk, sind jedoch relativ komplex und erfordern es insbesondere mehrere mitunter weit auseinanderliegende Protokollzeilen miteinander zu kombinieren, was insgesamt zu einem erhöhten Ressourcenbedarf der Protokolldatenanalyse führt.

Bei bekannten Gruppierungs-Verfahren zur Auffindung anomaler Zustände ist es allerdings schwierig, die Entwicklung von identifizierten Gruppen von Protokollzeiten vorherzusagen, sodass Veränderungsprozesse, die einzelne Gruppen im Laufe der Zeit durchmachen, nicht als Anomalien erkannt werden.

Die vorliegende Erfindung setzt sich zur Aufgabe ein Verfahren zur Detektion von anomalen Zuständen in einem Computernetzwerk bereitzustellen, das rasch und einfach kritische oder anomale Zustände in dem Computernetzwerk oder im Ablauf einzelner in dem Computernetzwerk ausgeführter Prozesse auffindet.

Die Erfindung löst diese Aufgabe mit dem in Anspruch 1 dargestellten erfindungsgemäßen Verfahren zur Erkennung von anomalen Betriebszuständen, insbesondere verursacht durch Manipulation, in einem Computernetzwerk, welches mehrere Computer umfasst, wobei

- von den Computern des Computernetzwerks oder von auf diesen Computern ablaufenden Prozessen jeweils Protokolle erstellt werden,
- von den Computern oder den Prozessen bei Auftreten vorgegebener Ereignisse für jedes dieser Ereignisse jeweils ein Protokolldatensatz in Form einer Protokollzeile erstellt wird und wobei jede Protokollzeile einen Beschreibungsdatensatz für das jeweilige protokollierte Ereignis umfasst.

Erfindungsgemäß ist dabei vorgesehen, dass

a) Zeitfenster vorgegeben werden, wobei die Zeitfenster insbesondere nahtlos aneinander grenzen und vorzugsweise gleich lang sind,

b) die Protokollzeilen entsprechend dem Zeitpunkt ihrer Erstellung oder Verarbeitung jeweils einem vorgegebenen Zeitfenster zugeordnet werden,

c) diejenigen Protokollzeilen, die einem jeweils betrachteten Zeitfenster zugeordnet sind, hinsichtlich ihrer Ähnlichkeit analysiert werden und aufgrund ihrer Ähnlichkeit nach einer vorgegebenen Metrik und unter Vorgabe eines Ähnlichkeits-Schwellenwerts zu einzelnen Gruppen zusammengefasst werden, wobei vorzugsweise jede Protokollzeile jeweils nur einer Gruppe zugeordnet wird,

d) Protokollzeilen eines jeweils betrachteten Zeitfensters zu Gruppen die jeweils benachbarten Zeitfenstern zugeordnet sind, unter Verwendung der in Schritt c) verwendeten Metrik, und gegebenenfalls des in Schritt c) verwendeten Ähnlichkeits-Schwellenwerts, zugeordnet werden,

e) eine Überlappungskennzahl gebildet wird, die aufgrund der in Schritt d) vorgenommenen Zuordnungen ein Maß für den Grad an Übereinstimmung zwischen den Protokollzeilen zweier oder mehrerer Gruppen in unterschiedlichen Zeitfenstern angibt,

f) unter Auswertung der gebildeten Überlappungskennzahl Gruppen aus zeitlich benachbarten Zeitfenstern einander zugeordnet werden, durch

- Finden von Gruppen, insbesondere einer Vorgänger-Gruppe und einer Nachfolger-Gruppe, deren Überlappungskennzahl einen vorgegebenen ersten Schwellenwert überschreitet und/oder
- Finden einer Anzahl von Nachfolger-Gruppen in einem nachfolgenden Zeitfenster für eine Vorgänger-Gruppe, wobei die Überlappungskennzahl zwischen jeder der Nachfolge-Gruppen mit der Vorgänger-Gruppe einen vorgegebenen zweiten Schwellenwert überschreitet und die Summe der so ermittelten Überlappungskennzahlen einen ersten vorgegebenen Schwellenwert überschreitet, und/oder

- Finden einer Anzahl von Vorgänger-Gruppen in einem vorangehenden Zeitfenster für eine Nachfolger-Gruppe, wobei die Überlappungskennzahl zwischen jeder der Vorgänger-Gruppen mit der Nachfolger-Gruppe einen vorgegebenen zweiten Schwellenwert überschreitet und die Summe der so ermittelten Überlappungskennzahlen einen vorgegebenen ersten Schwellenwert überschreitet, und/oder
- Finden von Gruppen denen keine Vorgänger-Gruppe oder Nachfolger-Gruppe zuordenbar ist, und

g) eine Anzahl von gerichteten Pfaden erstellt wird, die als Knoten Gruppen und als Kanten Zuordnungen umfassen und die den Verlauf einander zugeordneten Gruppen über eine vorgegebene Anzahl von zeitlich vorangehenden Zeitfenstern beschreiben, wobei die einzelnen Pfade den Verlauf einander zugeordneter Gruppen in zeitlich aufeinanderfolgenden Zeitfenstern im Graphen angeben, und

h) wobei für die einzelnen Pfade jeweils ein zeitlicher Verlauf eines Indikators für die jeweilige Gruppe über eine vorgegebene Anzahl von Zeitfenstern gebildet wird, und

i) die Verläufe der Indikatoren über die einzelnen Pfade für die Bestimmung herangezogen werden, ob ein anomaler Zustand vorliegt.

Eine vorteilhafte Festlegung der Zeitfenster, die im normalen Betrieb eine gleichmäßige Verteilung der Protokollzeilen auf die einzelnen Zeitfenster erlaubt, sieht vor, dass die Länge der Zeitfenster

- adaptiv an die Frequenz des Auftretens der vorgegebenen Ereignisse für die jeweils eine Protokollzeile erstellt wird, angepasst wird, oder
- regelbasiert entsprechend einer vorgegebenen Metrik, die einen Indikator für die Anzahl an erwarteten Ereignissen im Computernetzwerk liefert, verändert wird, insbesondere entsprechend der Tageszeit und/oder dem Wochentag und/oder der Auslastung des Computernetzwerks und/oder der Anzahl angemeldeter Benutzer angepasst wird.

Eine Ausführungsvariante der Erfindung, die eine Verarbeitung der Protokollzeilen im Echtzeitbetrieb ermöglicht, sieht vor, dass zur Zuordnung der einzelnen Protokollzeilen zu den Zeitfenstern in Schritt b) während des Betriebs hintereinander einzelne Zeitfenster festgelegt werden, wobei zu jedem Zeitpunkt jeweils eines der Zeitfenster aktuell ist und die Protokollzeilen unmittelbar nach ihrer Erstellung jeweils dem aktuellen Zeitfenster zugewiesen werden.

Eine Ausführungsvariante der Erfindung, die eine spätere Auswertung der Protokollzeilen ermöglicht, sieht vor, dass zur Zuordnung der einzelnen Protokollzeilen zu den Zeitfenstern in Schritt b) die Protokollzeilen mit einem Zeitstempel ihrer Erstellung oder des ihnen zugeordneten Ereignisses versehen werden, wobei die Protokollzeilen dem jeweiligen Zeitfenster aufgrund des ihnen zugewiesenen Zeitstempels zugewiesen werden.

Eine Ausführungsvariante der Erfindung, die eine einfache und effiziente Zuordnung von Gruppen erlaubt, sieht vor, dass in Schritt d) Protokollzeilen eines jeweils betrachteten Zeitfensters zu Gruppen zugeordnet werden, die einem jeweils zeitlich, vorzugsweise unmittelbar, vorangehenden oder nachfolgenden Zeitfenster, zugeordnet sind.

Eine numerisch effiziente Berechnungsvorschrift für die Überlappungskennzahl, sieht vor, dass in Schritt e) die Überlappungskennzahl angibt, wie viele einer Gruppe zugeordneten Protokollzeilen einer oder mehreren anderen Gruppen aus zeitlich benachbarten, insbesondere unmittelbar aufeinander folgenden, Zeitfenstern in Schritt d) zugeordnet werden konnten.

Um Überlappungen zwischen Gruppen besser berücksichtigen zu können, kann vorgesehen sein dass die Überlappungskennzahl für zwei Gruppen in unterschiedlichen Zeitfenstern als das Verhältnis der gegenseitigen Zuordnungen von Protokollzeilen einer Gruppe zur jeweils anderen Gruppe zu den insgesamt bestehenden Zuordnungen von Protokollzeilen dieser Gruppen angegeben wird.

Um Überlappungen zwischen einer Vielzahl von Gruppen über mehrere Zeitschritte besser berücksichtigen zu können und stabilere Aussagen über die Übereinstimmungen von Gruppen zu erzielen, kann vorgesehen sein dass die Überlappungskennzahl für mehrere ausgewählte Gruppen in jeweils unterschiedlichen Zeitfenstern als das Verhältnis zwischen

i) den gegenseitigen Zuordnungen von Protokollzeilen einer der ausgewählten Gruppen zu einer jeweils anderen ausgewählten Gruppe und

ii) den insgesamt bestehenden Zuordnungen von Protokollzeilen dieser ausgewählten Gruppen angegeben wird.

Um im Rahmen der Findung von Pfaden im Falle der Vereinigung von Pfaden eine vorteilhafte Weiterverfolgung des Pfads zu ermöglichen, kann vorgesehen sein, dass in Schritt f) für den Fall, dass für eine Gruppe mehrere Vorgänger-Gruppen zur Verfügung stehen und mehrere Pfade zu einem vereinigt werden, für den weiteren Verlauf des Pfads derjenige Pfad als Vorgänger-Pfad herangezogen und fortgesetzt wird,

- dessen Gruppen, insbesondere dessen letzte Gruppe, mit der gemeinsamen nachfolgenden Gruppe den größten Überlappungskoeffizienten aufweist,
- dessen Gruppen, insbesondere dessen letzte Gruppe, die meisten Protokollzeilen aufweist,
- der unter den in Frage kommenden Vorgänger-Pfaden am längsten ist und/oder am weitesten in die Vergangenheit reicht.

Um im Rahmen der Findung von Pfaden im Falle der Teilung von Pfaden eine vorteilhafte Weiterverfolgung des Pfads zu ermöglichen, kann vorgesehen sein, dass in Schritt f) für den Fall, dass für eine Gruppe mehrere Nachfolger-Gruppen gefunden wurden und ein Pfad in mehrere Pfade aufgeteilt wird, derjenige Pfad als Nachfolger-Pfad herangezogen wird und/oder der Pfad mit demjenigen Nachfolger-Pfad fortgesetzt wird,

i) dessen Gruppen, insbesondere dessen erste Gruppe, mit der gemeinsamen Gruppe den größten Überlappungskoeffizienten aufweist,
ii) dessen Gruppen, insbesondere dessen erste Gruppe, die meisten Protokollzeilen aufweist,
iii) der unter den in Frage kommenden Vorgänger-Pfaden am längsten ist und/oder am weitesten in die Vergangenheit reicht.

Um das Verhalten der einzelnen Gruppen in den Pfaden aussagekräftig beurteilen zu können, kann vorgesehen sein, dass als Indikator in Schritt h) eines der folgenden Indikatormaße herangezogen wird:

- die Größe der jeweiligen Gruppe,
- ein Maß für die mittlere Ähnlichkeit der einzelnen Protokollzeilen in der jeweiligen Gruppe,
- ein Maß für den Abstand der Protokollzeilen der Gruppe zu den Protokollzeilen anderer Gruppen,
- ein Indikator, der für die Zunahme und/oder Abnahme der Größe der jeweiligen Gruppe über den jeweiligen Pfad charakteristisch ist,
- ein Indikator, der für die Anzahl von Protokollzeilen charakteristisch ist, für die in den jeweils einander zugeordneten Gruppen keine ähnlichen Gruppen vorliegen, insbesondere
- die Anzahl der Protokollzeilen einer Gruppe, für die in der jeweils nachfolgenden oder vorangehenden Gruppe keine Entsprechungen vorhanden sind.

Eine bevorzugte Methode zur Bestimmung anormaler Zustände sieht vor, dass ausgehend von den in Schritt h) ermittelten Verläufen von Indikatoren oder der zeitfensterweise gebildeten Summe von ausgewählten Indikatoren in Schritt i)

- eine Zeitreihenvorhersage gebildet wird und ein Vorhersageintervall für den wahrscheinlichen Verlauf des Änderungsmaßes nach dem zeitlich spätesten Zeitfenster ermittelt wird, und
- der weitere zeitliche Verlauf des Indikators oder der zeitfensterweise gebildeten Summe von ausgewählten Indikatoren nach dem jeweiligen Zeitfenster daraufhin untersucht wird, ob er der Vorhersage entspricht und/oder im ermittelten Vorhersageintervall liegt, und falls dies nicht der Fall ist, ein anomaler Zustand im Computernetzwerk festgestellt wird.

Dabei kann insbesondere vorgesehen sein, dass die Zeitreihen-Vorhersage mittels eines Autoregressive Integrated Moving Average-Modells ermittelt wird.

Eine bevorzugte Methode zur Bestimmung anormaler Zustände sieht, vor, dass zwischen den einzelnen Verläufen von Indikatoren nach Korrelationen gesucht wird und für den Fall, dass neue Korrelationen auftreten oder, dass zuvor bestehende Korrelationen nicht mehr bestehen, ein anormaler Zustand im Computernetzwerk festgestellt wird.

Ein Programm zur Durchführung eines erfindungsgemäßen Verfahrens kann vorteilhafterweise auf einem Datenträger abgespeichert werden.

Besonders vorteilhafte, aber nicht einschränkend zu verstehende Ausführungsbeispiele der Erfindung werden im Folgenden anhand der beiliegenden Zeichnungen schematisch dargestellt und unter Bezugnahme auf die Zeichnungen beispielhaft beschrieben.

Im Folgenden zeigen:

Fig. 1 eine schematische Darstellung eines Computernetzwerks,
Fig. 2 eine schematische Darstellung von Protokollzeilen dreier Zeitfenster und deren Zuordnung zu Gruppen,
Fig. 3 schematisch die Zuordnung von Protokollzeilen zweier Zeitfenster zu Gruppen bzw. Gruppenkarten,
Fig. 4 ein schematisches Beispiel für die Entwicklung von Gruppen über mehrere Zeitfenster,

**Fig. 5** schematisch die Entwicklung der Gruppengröße dreier Gruppen über die Zeit,

**Fig. 6** schematisch die Entwicklung zweier Zeitreihen über die Zeit,

**Fig. 7** schematisch die Detektion von Anomalien für eine Zeitreihe mittels eines Vorhersageintervalls,

**Fig. 8a** schematisch die Detektion von Anomalien mittels eines Vorhersageintervalls für einen Pfad A,

**Fig. 8b** schematisch die Detektion von Anomalien mittels eines Vorhersageintervalls für einen Pfad B,

**Fig. 8c** schematisch die Detektion von Anomalien mittels eines Vorhersageintervalls für einen Pfad C und

**Fig. 9** schematisch eine Darstellung der Anomaliepunktzahl aufgetragen gegen die Zeit.

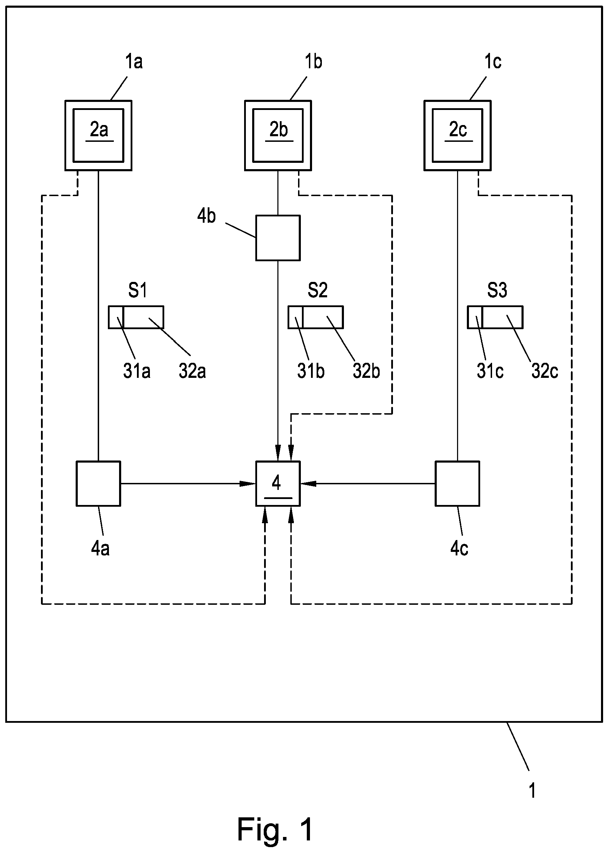

**Fig. 1** zeigt ein Computernetzwerk 1, bestehend aus Computern 1a, 1b, 1c, in dem mehrere Prozesse 2a, 2b, 2c ablaufen. Die Prozesse 2a, 2b, 2c erstellen zu unterschiedlichen Zeitpunkten Protokollmeldungen in Form von als Protokollzeilen $s_1$, $s_2$, $s_3$ bezeichneten Zeichenketten. Im gezeigten Ausführungsbeispiel werden dabei drei Protokollzeilen $s_1$, $s_2$, $s_3$ erstellt. Die Protokollzeilen $s_1$, $s_2$, $s_3$ umfassen dabei jeweils einen Beschreibungsdatensatz 32a, 32b, 32c und optional einen Zeitstempel 31a, 31b, 31c.

Optional ist eine Vorverarbeitung der Protokollzeilen $s_1$, $s_2$, $s_3$ möglich. In diesem Fall werden Protokollzeilen $s_1$, $s_2$, $s_3$ aus verschiedenen Quellen in ein einheitliches Format gebracht. Dazu werden zur einfacheren Verarbeitung und Auswertung der Protokollzeilen $s_1$, $s_2$, $s_3$ beispielsweise nicht darstellbare Sonderzeichen entfernt, die nicht einem festgelegten Standardformat, wie z.B. dem in RFC3164 definierten Standard-Syslog-Format, entsprechen. Bei dieser Vorverarbeitung der Protokollzeilen $s_1$, $s_2$, $s_3$ ist es optional weiters möglich, die Zeitstempel 31a, 31b, 31c der Protokollzeilen $s_1$, $s_2$, $s_3$ zu extrahieren und beispielsweise aus der Zeichenfolge (String) zu entfernen. Die extrahierten Zeitstempel 31a, 31b, 31c werden beispielsweise für später folgende Auswertungen wie eine Zeitreihenanalyse gespeichert.

Die einzelnen Protokollzeilen $s_1$, $s_2$, $s_3$ werden bei einer ersten Variante der Erfindung jeweils in Echtzeit weitergeleitet und zeitlich geordnet nach deren Erstellungszeitpunkt oder, sofern vorhanden, nach der in den Zeitstempeln 31a, 31b, 31c codierten Zeit, in eine zentrale Protokolldatei 4 geschrieben und/oder weiter verarbeitet.

Bei einer alternativen Variante der Erfindung können die Protokollzeilen $s_1$, $s_2$, $s_3$ jeweils in einer dem Computer 1a, 1b, 1c oder Prozess 2a, 2b, 2c zugehörigen Protokolldatei 4a, 4b, 4c abgespeichert werden. In diesem Fall werden die einzelnen Protokollzeilen $s_1$, $s_2$, $s_3$ üblicherweise in der Reihenfolge ihres Einlangens, d.h. nach deren Erstellungszeitpunkt oder, sofern vorhanden, deren Zeitstempel 31a, 31b, 31c, in die Protokolldateien 4a, 4b, 4c geschrieben. Zu einem späteren Zeitpunkt können die einzelnen Protokolldatensätze der Protokolldateien 4a, 4b, 4c in eine gemeinsame zentrale Protokolldatei 4 geschrieben werden.

Die folgende **Tabelle 1** zeigt einen schematischen Ausschnitt einer derartigen Protokolldatei 4 deren einzelne Einträge Protokollzeilen $s_1$, $s_2$, $s_3$ repräsentieren.

| ID | Protokollzeile |
|----|----------------|
| 0 | Oct 13 00:00:01 192.168.2.20 - - "GET /image_version_1.png HTTP/1.0" 200 3395 |
| 1 | Oct 13 00:00:05 192.168.5.33 - - "GET/image_version_1.png HTTP/1.0" 200 3395 |
| 2 | Oct 13 00:00:14 [error] [client 1.2.3.4] user test: authentication failure for "/~dcid/test1": Password Mismatch |
| 3 | Oct 13 00:00:26 192.168.2.20 - - "GET/image_version_2.png HTTP/1.0" 200 3395 |
| 4 | Oct 13 00:00:33 192.168.2.20 - - "GET /image_version_1.png HTTP/1.0" 200 3395 |
| 5 | Oct 13 00:00:35 [error] [client 1.2.3.4] user test: authentication failure for "/~dcid/test2": Password Mismatch |
| 6 | Oct 13 00:00:41 192.168.2.20 - - "GET /image_version_2.png HTTP/1.0" 200 3395 |
| 7 | Oct 13 00:00:54 [error] [client 1.2.3.4] user test: authentication failure for "/~dcid/test3": Password Mismatch |
| 8 | Oct 13 00:00:56 [error] [client 1.2.3.4] user test: authentication failure for "/~dcid/test2": Password Mismatch |
| 9 | Oct 13 00:01:05 192.168.2.20 - - "GET/image_version_2_temp.png HTTP/1.0" 200 3395 |
| 10 | Oct 13 00:01:12 192.168.5.33 - - "GET /image_version_2.png HTTP/1.0" 200 3395 |
| 11 | Oct 13 00:01:18 [error] [client 1.2.3.4] user test: authentication failure for "/~dcid/test1": Password Mismatch |
| 12 | Oct 13 00:01:22 192.168.2.20 - - "GET /image_version_2.png HTTP/1.0" 200 3395 |
| 13 | Oct 13 00:01:25 192.168.5.33 - - "GET /image_version_3.png HTTP/1.0" 200 3395 |
| 14 | Oct 13 00:01:36 192.168.5.20 - - "GET /image_version_2_temp.png HTTP/1.0" 200 3395 |
| 15 | Oct 13 00:01:44 192.168.2.20 - - "GET /image_version_2.png HTTP/1.0" 200 3395 |

(fortgesetzt)

| ID | Protokollzeile |
|---|---|
| 16 | Oct 13 00:01:49 [error] [client 1.2.3.4] user test: authentication failure for "/~dcid/test3": Password Mismatch |
| 17 | Oct 13 00:01:55 [error] [client 1.2.3.4] user test: authentication failure for "/~dcid/test3": Password Mismatch |
| 18 | Oct 13 00:02:09 192.168.2.20 - - "GET /image_version_2.png HTTP/1.0" 200 3395 |
| 19 | Oct 13 00:02:11 192.168.2.20 - - "GET /image_version_3.png HTTP/1.0" 200 3395 |
| 20 | Oct 13 00:02:24 [error] [client 1.2.3.4] user test: authentication failure for "/~dcid/test1": Password Mismatch |
| 21 | Oct 13 00:02:26 [error] [client 1.2.3.4] user test: authentication failure for "/~dcid/test1": Password Mismatch |
| 22 | Oct 13 00:02:34 192.168.2.20 - - "GET /image_version_3_temp.png HTTP/1.0" 200 3395 |
| 23 | Oct 13 00:02:46 [error] [client 1.2.3.4] user test: authentication failure for "/~dcid/test3": Password Mismatch |
| 24 | Oct 13 00:02:52 192.168.5.33 - - "GET /image_version_2.png HTTP/1.0" 200 3395 |
| 25 | Oct 13 00:02:57 192.168.5.33 - - "GET /image_version_3.png HTTP/1.0" 200 3395 |
| 26 | Oct 13 00:02:58 [error] [client 1.2.3.4] user test: authentication failure for "/~dcid/test2": Password Mismatch |
| 27 | Oct 13 00:03:09 192.168.2.20 - - "GET /image_version_3.png HTTP/1.0" 200 3395 |
| 28 | Oct 13 00:03:13 [error] [client 1.2.3.4] user test: authentication failure for "/~dcid/test2": Password Mismatch |
| 29 | Oct 13 00:03:14 192.168.2.20 - - "GET /image_version_4.png HTTP/1.0" 200 3395 |
| 30 | Oct 13 00:03:20 [error] [client 1.2.3.4] user test: authentication failure for "/~dcid/test2": Password Mismatch |
| 31 | Oct 13 00:03:24 192.168.2.20 - - "GET /image_version_4.png HTTP/1.0" 200 3395 |
| 32 | Oct 13 00:03:26 [error] [client 1.2.3.4] Client sent malformed Host header |
| 33 | Oct 13 00:03:27 [error] [client 1.2.3.4] user test: authentication failure for "/~dcid/test3": Password Mismatch |
| 34 | Oct 13 00:03:29 [error] [client 1.2.3.4] user test: authentication failure for "/~dcid/test1": Password Mismatch |
| 35 | Oct 13 00:03:34 [error] [client 1.2.3.4] Client sent malformed Host header |
| 36 | Oct 13 00:03:36 [error] [client 1.2.3.4] user test: authentication failure for "/~dcid/test2": Password Mismatch |
| 37 | Oct 13 00:03:38 192.168.2.20 - - "GET /image_version_4.png HTTP/1.0" 200 3395 |
| 38 | Oct 13 00:03:44 192.168.5.33 - - "GET /image_version_4.png HTTP/1.0" 200 3395 |
| 39 | Oct 13 00:03:46 192.168.2.20 - - "GET /image_version_5.png HTTP/1.0" 200 3395 |
| 40 | Oct 13 00:03:50 [error] [client 1.2.3.4] user test: authentication failure for "/~dcid/test1": Password Mismatch |
| 41 | Oct 13 00:03:52 [error] [client 1.2.3.4] user test: authentication failure for "/~dcid/test1": Password Mismatch |
| 42 | Oct 13 00:03:57 [error] [client 1.2.3.4] user test: authentication failure for "/~dcid/test1": Password Mismatch |
| 43 | Oct 13 00:04:05 192.168.2.20 - - "GET /image_version_5_new.png HTTP/1.0" 200 3395 |
| 44 | Oct 13 00:04:07 [error] [client 1.2.3.4] Client sent malformed Host header |
| 45 | Oct 13 00:04:10 192.0.0.20 - - "GET /image_version_4.png HTTP/1.0" 200 3395 |
| 46 | Oct 13 00:04:16 192.168.2.20 - - "GET /image_version_4_new.png HTTP/1.0" 200 3395 |
| 47 | Oct 13 00:04:19 [error] [client 1.2.3.4] Client sent malformed Host header |
| 48 | Oct 13 00:04:23 [error] [client 1.2.3.4] Client sent malformed Host header |
| 49 | Oct 13 00:04:27 192.0.0.20 - - "GET /image_version_5.png HTTP/1.0" 200 3395 |
| 50 | Oct 13 00:04:28 [error] [client 1.2.3.4] Client sent malformed Host header |
| 51 | Oct 13 00:04:33 [error] [client 1.2.3.4] user test: authentication failure for "/~dcid/test3": Password Mismatch |
| 52 | Oct 13 00:04:46 [error] [client 1.2.3.4] Client sent malformed Host header |
| 53 | Oct 13 00:04:48 192.168.2.20 - - "GET /image_version_5_renew.png HTTP/1.0" 200 3395 |

| ID | Protokollzeile |
|----|----------------|
| 54 | Oct 13 00:04:51 192.0.0.20 - - "GET /image_version_4_copy.png HTTP/1.0" 200 3395 |
| 55 | Oct 13 00:04:53 192.168.2.20 - - "GET /image_version_5_renew.png HTTP/1.0" 200 3395 |
| 56 | Oct 13 00:04:54 192.168.2.20 - - "GET /image_version_6_new.png HTTP/1.0" 200 3395 |
| 57 | Oct 13 00:04:55 192.0.0.20 - - "GET /image_version_5_copy.png HTTP/1.0" 200 3395 |
| 58 | Oct 13 00:05:03 192.168.2.20 - - "GET /image_version_6_new.png HTTP/1.0" 200 3395 |
| 59 | Oct 13 00:05:04 127.0.0.20 - - "GET /image_version_6.png HTTP/1.0" 200 3395 |
| 60 | Oct 13 00:05:06 [error] [client 1.2.3.4] Client sent malformed Host header |
| 61 | Oct 13 00:05:09 192.168.2.20 - - "GET /image_version_6_new.png HTTP/1.0" 200 3395 |
| 62 | Oct 13 00:05:12 127.0.0.20 - - "GET /image_version_6.png HTTP/1.0" 200 3395 |
| 63 | Oct 13 00:05:15 127.0.0.20 - - "GET /image_version_5.png HTTP/1.0" 200 3395 |
| 64 | Oct 13 00:05:20 [error] [client 1.2.3.4] Client sent malformed Host header |
| 65 | Oct 13 00:05:22 127.0.0.20 - - "GET /image_version_5.png HTTP/1.0" 200 3395 |
| 66 | Oct 13 00:05:24 192.168.2.20 - - "GET /image_version_6_new.png HTTP/1.0" 200 3395 |
| 67 | Oct 13 00:05:27 [error] [client 1.2.3.4] Client sent malformed Host header |
| 68 | Oct 13 00:05:33 127.0.0.20 - - "GET /image_version_6.png HTTP/1.0" 200 3395 |
| 69 | Oct 13 00:05:36 127.0.0.20 - - "GET /image_version_5.png HTTP/1.0" 200 3395 |
| 70 | Oct 13 00:05:39 [error] [client 1.2.3.4] Client sent malformed Host header |
| 71 | Oct 13 00:05:42 192.168.2.20 - - "GET /image_version_6_new.png HTTP/1.0" 200 3395 |
| 72 | Oct 13 00:05:46 [error] [client 1.2.3.4] Client sent malformed Host header |
| 73 | Oct 13 00:05:51 192.168.2.20 - - "GET /image_version_6_new.png HTTP/1.0" 200 3395 |
| 74 | Oct 13 00:05:53 127.0.0.20 - - "GET /image_version_6.png HTTP/1.0" 200 3395 |

## Zuordnung von Protokollzeilen zu Zeitfenstern

Zur weiteren Verarbeitung der Protokollzeilen werden in einem ersten Schritt a) Zeitfenster $T^1$, $T^2$, $T^3$ vorgegeben, die insbesondere nahtlos aneinander grenzen und vorzugsweise gleich lang sind.

In einem weiteren Zuordnungsschritt b) werden die ermittelten Protokollzeilen $s_1$, $s_2$, $s_3$, die beispielsweise in der zentralen Protokolldatei 4 liegen, jeweils einem vorgegebenen Zeitfenster $T^1$, $T^2$, $T^3$ zugeordnet. Für diese Zuordnung wird der jeweilige Erstellungszeitpunkt einer Protokollzeile $s_1$, $s_2$, $s_3$, oder, sofern vorhanden, deren Zeitstempel 31a, 31b, 31c, herangezogen und derart werden alle Protokollzeilen $s_1$, $s_2$, $s_3$, die einem jeweiligen Zeitfenster $T^1$, $T^2$, $T^3$ zugeordnet sind, zusammengefasst.

Sofern die einzelnen Protokolldatensätze, wie dies bei der zuvor beschriebenen ersten Variante der Fall ist, in Echtzeit an die zentrale Protokolldatei 4 weitergeleitet werden, ist es nicht erforderlich, diese mit einem Zeitstempel 31a, 31b, 31c zu versehen, da die Gruppierung der Protokollzeilen $s_1$, $s_2$, $s_3$ nach Zeitfenstern $T^1$, $T^2$, $T^3$ aufgrund des Einlangens der Protokolldatensätze bei der zentralen Protokolldatei 4 in Echtzeit vorgenommen werden kann.

Sollen hingegen, wie dies bei der zuvor beschriebenen alternativen Variante der Fall ist, nachträglich einzelne Protokolldateien 4a, 4b, 4c einzelner Computer auf das Vorliegen von anormalen Zuständen untersucht werden, so wird die Zuordnung der Protokollzeilen $s_1$, $s_2$, $s_3$ zu Zeitfenstern $T^1$, $T^2$, $T^3$ aufgrund des ihnen zugeordneten Zeitstempels 31a, 31b, 31c vorgenommen.

Den Zeitfenstern $T^1$, $T^2$, $T^3$ wird eine vorgegebene Länge zugewiesen, die die Granularität des Verfahrens festlegt. Diese Länge hängt von der durchschnittlichen Häufigkeit der Erstellung von Protokollzeilen $s_1$, $s_2$, $s_3$ ab, insbesondere kann die Länge der Zeitfenster derart vorgegeben werden, dass in die einzelnen Zeitfenster $T^1$, $T^2$, $T^3$ jeweils dieselbe Anzahl von Protokollzeilen $s_1$, $s_2$, $s_3$ fällt. Darüber hinaus kann die Länge der einzelnen Zeitfenster durch die Periodendauer der zu erwartenden oder der festgestellten periodisch auftretenden Ereignisse festgelegt werden. Die Anzahl der Protokollzeilen $s_1$, $s_2$, $s_3$ pro Zeitfenster $T^1$, $T^2$, $T^3$ kann dabei in Anpassung an den Anwendungsfall festgelegt werden.

**Konstruktionsschritt**

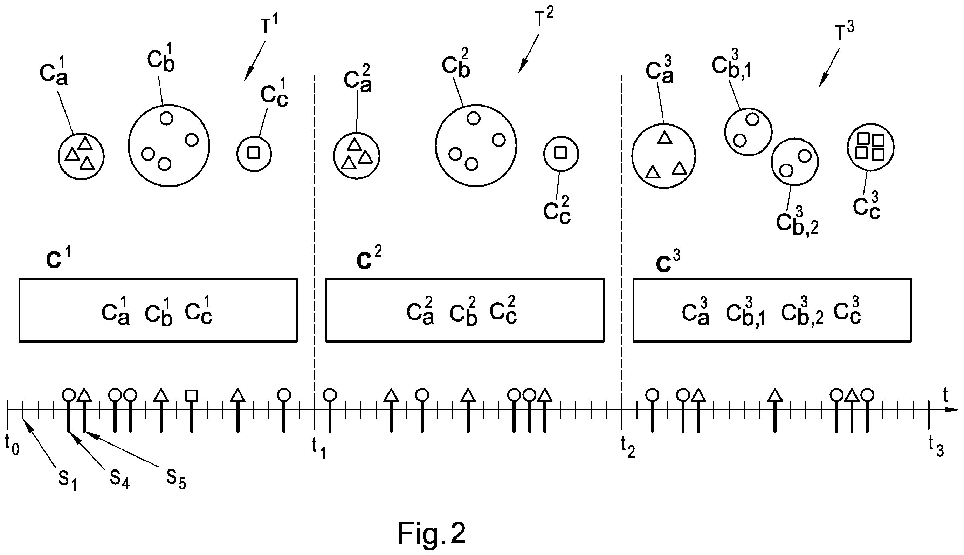

Anschließend werden in einem Konstruktionsschritt c) die einzelnen Protokollzeilen $s_1$, $s_2$, $s_3$, die einem jeweils betrachteten Zeitfenster $T^1$, $T^2$, $T^3$ zugeordnet sind, hinsichtlich ihrer Ähnlichkeit analysiert und aufgrund ihrer Ähnlichkeit nach einer vorgegebenen Metrik und unter Vorgabe eines Ähnlichkeits-Schwellenwerts zu Gruppen $C^1_a$, $C^1_b$, $C^1_c$, $C^2_a$, $C^2_b$, $C^2_c$, $C^3_a$, $C^3_b$, $C^3_c$ zusammengefasst **(Fig. 2)**. Dabei wird jede Protokollzeilen $s_1$, $s_2$, $s_3$ eines jeweils betrachteten Zeitfensters $T^1$, $T^2$, $T^3$ jeweils nur einer einzigen Gruppe $C^1_a$, $C^1_b$, $C^1_c$, $C^2_a$, $C^2_b$, $C^2_c$, $C^3_a$, $C^3_b$, $C^3_c$ zugeordnet. Je nach Art des gewählten Gruppierungs- bzw. Clustering-Verfahrens ist es möglich, dass einzelne Protokollzeilen mehreren Gruppen zugeordnet werden oder dass keine Mehrfachzuordnung der einzelnen Protokollzeilen $s_1$, $s_2$, $s_3$ zu Clustern bzw. Gruppen unterbunden wird.

Mittels dieser Zuordnung wird für ausgewählte, insbesondere alle, Zeitfenster $T^1$, $T^2$, $T^3$ eine Gruppenkarte $C^1$, $C^2$, $C^3$ von Gruppen $C^1_a$, $C^1_b$, $C^1_c$, $C^2_a$, $C^2_b$, $C^2_c$, $C^3_a$, $C^3_b$, $C^3_c$, die jeweils ähnliche Protokollzeilen $s_1$, $s_2$, $s_3$ enthalten, erstellt. Als Ergebnis wird eine Sequenz von derartigen Gruppenkarten $C^1$, $C^2$, $C^3$ erhalten.

Bei einer bevorzugten Implementierung eines erfindungsgemäßen Verfahrens kann davon ausgegangen werden, dass alle Protokollzeilen $s_1$, $s_2$, $s_3$ oder Protokolldatensätze 3a, 3b, 3c jeweils einer der Gruppen $C^1_a$, $C^1_b$, $C^1_c$, $C^2_a$, $C^2_b$, $C^2_c$, $C^3_a$, $C^3_b$, $C^3_c$ zugewiesen werden. Innerhalb der jeweiligen Gruppe $C^1_a$, $C^1_b$, $C^1_c$, $C^2_a$, $C^2_b$, $C^2_c$, $C^3_a$, $C^3_b$, $C^3_c$ kann ein für die Gruppe $C^1_a$, $C^1_b$, $C^1_c$, $C^2_a$, $C^2_b$, $C^2_c$, $C^3_a$, $C^3_b$, $C^3_c$ repräsentativer Protokolldatensatz 3a, 3b, 3c festgelegt werden. Dieser wird insbesondere bereits bei der Erstellung der Gruppe $C^1_a$, $C^1_b$, $C^1_c$, $C^2_a$, $C^2_b$, $C^2_c$, $C^3_a$, $C^3_b$, $C^3_c$ festgelegt, und zwar durch den ersten Protokolldatensatz 3a, 3b, 3c, der der betreffenden Gruppe $C^1_a$, $C^1_b$, $C^1_c$, $C^2_a$, $C^2_b$, $C^2_c$, $C^3_a$, $C^3_b$, $C^3_c$ hinzugefügt wird. Vorteilhafterweise wird auch dieser repräsentative Protokolldatensatz 3a, 3b, 3c für die Bestimmung der Ähnlichkeit zur jeweiligen Gruppe $C^1_a$, $C^1_b$, $C^1_c$, $C^2_a$, $C^2_b$, $C^2_c$, $C^3_a$, $C^3_b$, $C^3_c$ sowie zur Zuordnung von Protokollzeilen zur jeweiligen Gruppe herangezogen. Dieser repräsentative Protokolldatensatz einer Gruppe $C^1_a$, $C^1_b$, $C^1_c$, $C^2_a$, $C^2_b$, $C^2_c$, $C^3_a$, $C^3_b$, $C^3_c$ wird auch als Gruppen-Repräsentative bezeichnet.

Die Erstellung der einzelnen Gruppenkarten für die einzelnen Zeitfenster $T^1$, $T^2$, $T^3$ wird üblicherweise von einem inkrementellen Clustering-Algorithmus bewerkstelligt. Ein vorteilhafter inkrementeller Clustering-Algorithmus ist beispielsweise in M. Wurzenberger, F. Skopik, R. Fiedler, M. Landauer, P. Greitbauer, W. Kastner, "Incremental Clustering for Semi-Supervised Anomaly Detection applied on Log Data", International Conference on Availability, Reliability and Security Proceedings, 2017, näher beschrieben.

Für die Protokollzeilen $s_1$, $s_2$, $s_3$ eines betrachteten Zeitfensters $T^1$, $T^2$, $T^3$, erfolgt die Gruppierung folgendermaßen: Die erste Protokollzeile $s_1$, $s_2$, $s_3$, die einem Zeitfenster $T_{15}$ $T^2$, $T^3$ zugeordnet ist, erzeugt immer eine neue Gruppe $C^1_a$, $C^1_b$, $C^1_c$, $C^2_a$, $C^2_b$, $C^2_c$, $C^3_a$, $C^3_b$, $C^3_c$. Für jede weitere Protokollzeile $s_1$, $s_2$, $s_3$ des betrachteten Zeitfensters $T^1$, $T^2$, $T^3$ wird durch den Vergleich der Gruppen-Repräsentativen mit der aktuell bearbeiteten, einer Gruppe zuzuweisenden, Protokollzeile $s_1$, $s_2$, $s_3$ diejenige Gruppe $C^1_a$, $C^1_b$, $C^1_c$, $C^2_a$, $C^2_b$, $C^2_c$, $C^3_a$, $C^3_b$, $C^3_c$ identifiziert, der jeweils die ähnlichsten Protokollzeilen $s_1$, $s_2$, $s_3$ zugeordnet sind. Anschließend wird die bearbeitete Protokollzeile $s_1$, $s_2$, $s_3$ entweder dieser Gruppe $C^1_a$, $C^1_b$, $C^1_c$, $C^2_a$, $C^2_b$, $C^2_c$, $C^3_a$, $C^3_b$, $C^3_c$ zugeordnet oder die bearbeitete Protokollzeile $s_1$, $s_2$, $s_3$ bildet, falls die Ähnlichkeit der bearbeiteten Protokollzeile $s_1$, $s_2$, $s_3$ zu den Protokollzeilen $s_1$, $s_2$, $s_3$ oder der Gruppen-Repräsentativen der identifizierten Gruppe $C^1_a$, $C^1_b$, $C^1_c$, $C^2_a$, $C^2_b$, $C^2_c$, $C^3_a$, $C^3_b$, $C^3_c$ einen vorgegebenen Schwellenwert nicht überschreitet, eine neue Gruppe $C^1_a$, $C^1_b$, $C^1_c$, $C^2_a$, $C^2_b$, $C^2_c$, $C^3_a$, $C^3_b$, $C^3_c$, für die die bearbeitete Protokollzeile $s_1$, $s_2$, $s_3$ als Gruppen-Repräsentative dient. Dieser Verfahrensschritt wird für die Protokollzeilen $s_1$, $s_2$, $s_3$ ausgewählter, insbesondere aller, Zeitfenster $T^1$, $T^2$, $T^3$ wiederholt.

Die im Rahmen der Erfindung verwendeten Verfahren zur Ermittlung der Ähnlichkeit zwischen Protokollzeilen $s_1$, $s_2$, $s_3$ beruhen vorzugsweise auf der Anwendung einer Distanzfunktion, die die Ähnlichkeit zwischen zwei Protokollzeilen $s_1$, $s_2$, $s_3$ angibt. Beispielsweise kann als Distanzfunktion der Levenshtein-Abstand zweier Zeichenketten gewählt werden. Diese Distanzfunktion ist dazu geeignet, Zeichenketten, d.h. Protokollzeilen $s_1$, $s_2$, $s_3$ unterschiedlicher Länge miteinander zu vergleichen und ermöglicht derart eine einfache Quantifizierung der Unterschiedlichkeit oder Ähnlichkeit zweier Protokollzeilen $s_1$, $s_2$, $s_3$.

Besonders bevorzugt basiert das Gruppierungs-Verfahren auf einem Sequenzalignment, wobei zur Bestimmung, wie ähnlich oder unähnlich zwei Protokollzeilen $s_1$, $s_2$, $s_3$ sind, das Sequenzalignment dieser Protokollzeilen $s_1$, $s_2$, $s_3$ berechnet wird. Zur zahlenmäßigen Festlegung der Ähnlichkeit wird der Levenshtein-Abstand der beiden betrachteten Protokollzeilen $s_1$, $s_2$, $s_3$ basierend auf deren Sequenzalignment berechnet. Anschließend wird der so ermittelte Wert durch die Länge des Sequenzalignments normiert, wodurch ein Ähnlichkeitsmaßwert der Protokollzeilen $s_1$, $s_2$, $s_3$ bestimmt wird, der aufgrund dieser Normierung Werte auf einer Skala von 0 bis 1 aufweist. Zwei Protokollzeilen werden dann als ähnlich angesehen und derselben Gruppe zugewiesen, wenn der Ähnlichkeitsmaßwert jeweils zweier Protokollzeilen $s_1$, $s_2$, $s_3$ einen vorgegebenen Schwellenwert überschreitet. Je nachdem, wie genau das gewünschte Ergebnis sein soll, kann der Schwellenwert höher oder niedriger gewählt werden.

Aus dem Stand der Technik ist eine Vielzahl von Gruppierungs-Verfahren bekannt, die auf der Anwendung einer Distanzfunktion beruhen und ein Zusammenfassen einzelner Protokollzeilen zu Gruppen $C^1_a$, $C^1_b$, $C^1_c$, $C^2_a$, $C^2_b$, $C^2_c$, $C^3_a$, $C^3_b$, $C^3_c$ oder Gruppen von untereinander ähnlichen Protokollzeilen ermöglichen. Solche Gruppierungs-Verfahren sind beispielsweise *CLIQUE (*Agrawal, R., Gehrke, J., Gunopulos, D., & Raghavan, P. (1998). Automatic subspace clustering of high dimensional data for data mining applications (Vol. 27, No. 2, pp. 94-105). ACM.*), MAFIA (*Goil, S., Nagesh, H., & Choudhary, A. (1999, June). MAFIA: Efficient and scalable subspace clustering for very large data sets. In Proceedings of the 5th ACM SIGKDD International Conference on Knowledge Discovery and Data Mining (pp. 443-452). ACM.*), CACTUS (*Ganti, V., Gehrke, J., & Ramakrishnan, R. (1999, August). CACTUS-clustering categorical data using summaries. In Proceedings of the fifth ACM SIGKDD international conference on Knowledge discovery and data mining (pp. 73-83). ACM.*), PROCULUS (*Aggarwal, C. C., Wolf, J. L., Yu, P. S., Procopiuc, C., & Park, J. S. (1999, June). Fast algorithms for projected clustering. In ACM SIGMoD Record (Vol. 28, No. 2, pp. 61-72). ACM.*) und SLCT (*Vaarandi, R. (2003, October). A data clustering algorithm for mining patterns from event logs. In Proceedings of the 2003 IEEE Workshop on IP Operations and Management (IPOM) (pp. 119-126)*).

Ein erfindungsgemäßes Verfahren liefert als Ergebnis der Zuordnung der Protokollzeilen $s_1$, $s_2$, $s_3$ mehrerer Zeitfenster $T^1$, $T^2$, $T^3$ zu Gruppen $C^1_a$, $C^1_b$, $C^1_c$, $C^2_a$, $C^2_b$, $C^2_c$, $C^3_a$, $C^3_b$, $C^3_c$, auf die oben beschriebene Weise eine geordnete Sequenz von unabhängigen Gruppenkarten $\mathbf{C}^1$, $\mathbf{C}^2$, $\mathbf{C}^3$.

**Fig. 2** zeigt ein Beispiel für die Zuordnung von Protokollzeilen $s_1$, ..., $s_n$ zu Gruppen $C^1_a$, $C^1_b$, $C^1_c$, $C^2_a$, $C^2_b$, $C^2_c$, $C^3_a$, $C^3_b$, $C^3_c$ und die als Ergebnis erhaltenen Gruppenkarten $\mathbf{C}^1$, $\mathbf{C}^2$, $\mathbf{C}^3$ für drei Zeitfenster $T^1$, $T^2$, $T^3$. In **Fig. 2** ist eine kontinuierliche Zeitskala dargestellt, entlang der vier Zeitpunkte $t_0$, $t_1$, $t_2$, $t_3$ als Begrenzungszeitpunkte dreier Zeitfenster $T^1$, $T^2$, $T^3$ markiert sind. Das Zeitfenster $T^1$ beinhaltet dabei den Zeitraum von $t_0$ bis $t_1$, Zeitfenster $T^2$ den Zeitraum von $t_1$ bis $t_2$ und Zeitfenster $T^3$ den Zeitraum von $t_2$ bis $t_3$.

Diesen Zeitfenstern $T^1$, $T^2$, $T^3$ sind Protokollzeilen $s_1$, ..., $s_n$ zugeordnet, die drei Arten von Ereignissen entsprechen. Dabei sind die drei Arten von Ereignissen in **Fig. 2** symbolisch mit Kreisen, Dreiecken und Quadraten gekennzeichnet. **Fig. 2** zeigt das Vorkommen dieser Ereignisse auf der kontinuierlichen Zeitskala, die durch die Zeitpunkte $t_0$, $t_1$, $t_2$, $t_3$ in drei Zeitfenster $T^1$, $T^2$, $T^3$ aufgeteilt ist.

Nach der voranstehend beschriebenen Vorgangsweise werden die Protokollzeilen $s_1$, ..., $s_n$ in jedem der Zeitfenster $T^1$, $T^2$, $T^3$ zu Gruppen $C^1_a$, $C^1_b$, $C^1_c$, $C^2_a$, $C^2_b$, $C^2_c$, $C^3_a$, $C^3_b$, $C^3_c$ zusammengefasst. Dabei werden im Zeitfenster $T^1$ die Protokollzeilen 3a, 3b, 3c drei Gruppen $C^1_a$, $C^1_b$, $C^1_c$ zugeordnet, da im Zeitabschnitt $t_0$ bis $t_1$ Ereignisse aller drei Arten von Ereignissen aufgetreten sind und von den Computern 1a, 1b, 1c, bzw. den Prozessen 2a, 2b, 2c dementsprechende Protokollzeilen $s_1$, ..., $s_n$ erstellt wurden. Die Gruppenkarte $\mathbf{C}^1$ des Zeitfensters $T^1$ umfasst somit drei Gruppen $C^1_a$, $C^1_b$, $C^1_c$.

Im Zeitfenster $T^2$ werden die Protokollzeilen $s_1$, ..., $s_n$ ebenfalls drei Gruppen $C^2_a$, $C^2_b$, $C^2_c$ zugeordnet, da im Zeitabschnitt $t_1$ bis $t_2$ drei Arten von Ereignissen aufgetreten sind und die Gruppenkarte $\mathbf{C}^2$ des Zeitfensters $T^2$ umfasst drei Gruppen $C^2_a$, $C^2_b$, $C^2_c$. Im Zeitabschnitt $t_2$ bis $t_3$ sind ebenfalls alle drei Arten von Ereignissen aufgetreten. Dabei sind jedoch bei den Ereignissen, die mit Kreisen gekennzeichnet sind, zwei Unterarten unterscheidbar, sodass die Protokollzeilen $s_1$, ..., $s_n$ im Zeitfenster $T^3$ vier Gruppen $C^3_a$, $C^3_{b,1}$, $C^3_{b,2}$, $C^3_c$ zugeordnet werden. Dabei umfassen die beiden Gruppen $C^3_{b,1}$, $C^3_{b,2}$ jeweils Ereignisse einer der beiden Unterarten der mit Kreisen gekennzeichneten Ereignisse. Somit umfasst die Gruppenkarte $\mathbf{C}^3$ des Zeitfensters $T^3$ vier Gruppen $C^3_a$, $C^3_{b,1}$, $C^3_{b,2}$, $C^3_c$.

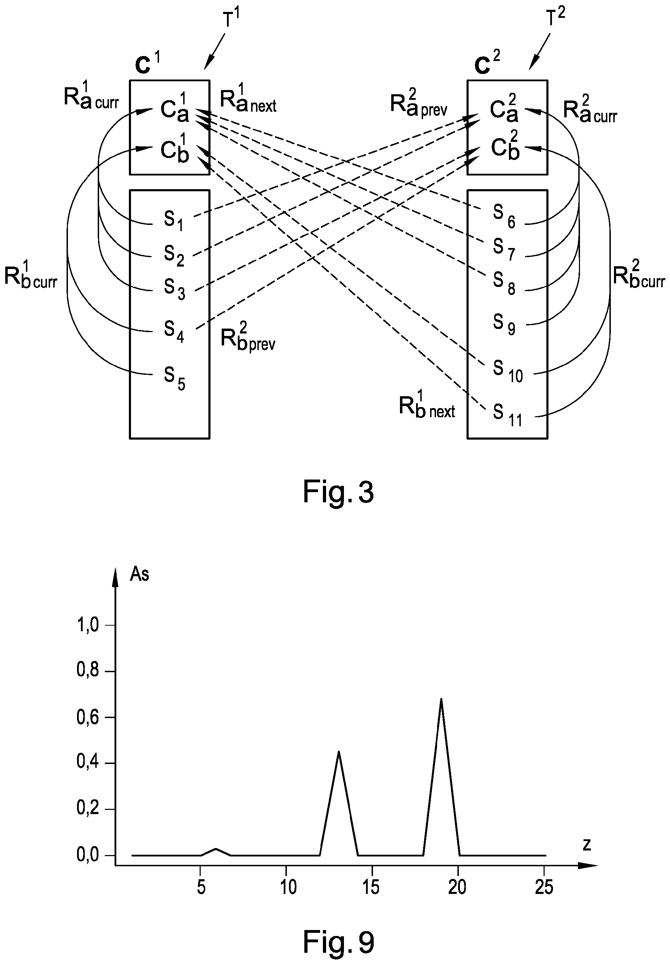

Ein Beispiel für einen Konstruktionsschritt c) ist in **Fig. 3** dargestellt: **Fig. 3** zeigt die Konstruktion zweier Gruppenkarten zeitlich aufeinanderfolgender Zeitfenster $T^1$, $T^2$. Dabei sind dem Zeitfenster $T^1$ fünf Protokollzeilen $s_1$, ..., $s_5$ und dem Zeitfenster $T^2$ sechs Protokollzeilen $s_6$, ..., $s_{11}$ zugeordnet. Die durchgezogenen Linien repräsentieren die Konstruktion der Gruppenkarte $\mathbf{C}^1$, $\mathbf{C}^2$. Dabei werden die Protokollzeilen $s_1$, ..., $s_3$ des Zeitfensters $T^1$ der Gruppe $C^1_a$ zugeordnet und für die Gruppe $C^1_a$ als Zuordnungen bzw. Referenzen $R^1_{a,curr}$ gespeichert. Die Protokollzeilen $s_4$, $s_5$ werden der Gruppe $C^1_b$ zugeordnet und für die Gruppe $C^1_b$ als Zuordnungen $R^1_{b,curr}$ hinterlegt. Die beiden Gruppen $C^1_a$ und $C^1_b$ bilden schließlich die Gruppenkarte $\mathbf{C}^1$ des Zeitfensters $T^1$.

Beim Zeitfenster $T^2$ werden die Protokollzeilen $s_6$, ..., $s_9$ der Gruppe $C^2_a$ zugeordnet und als für die Gruppe $C^2_a$ als Zuordnungen bzw. Referenzen $R^2_{a,curr}$ gespeichert. Die Protokollzeilen $s_{10}$, $s_{11}$ werden der Gruppe $C^2_b$ zugeordnet und für die Gruppe $C^2_b$ als Zuordnungen $R^2_{b,curr}$ hinterlegt. Die beiden Gruppen $C^2_a$ und $C^2_b$ bilden die Gruppenkarte $\mathbf{C}^2$ des Zeitfensters $T^2$.

## Zuordnungsschritt

Nach der isolierten Generierung der einzelnen Gruppenkarten $\mathbf{C}^1$, $\mathbf{C}^2$, $\mathbf{C}^3$ im Konstruktionsschritt c), werden in einem Zuordnungsschritt d) Verbindungen, die die Entwicklung einer Gruppe $C^1_a$, $C^1_b$, $C^1_c$, $C^2_a$, $C^2_b$, $C^2_c$, $C^3_a$, $C^3_b$, $C^3_c$ über ein Zeitfenster hinaus angeben, erstellt.

Während die Sequenz von Gruppenkarte $\mathbf{C}^1$, $\mathbf{C}^2$, $\mathbf{C}^3$ selbst eine dynamische Ansicht der Daten darstellt, zeigt jede Gruppenkarte $\mathbf{C}^1$, $\mathbf{C}^2$, $\mathbf{C}^3$, die für ein jeweils betrachtetes Zeitfenster $T^1$, $T^2$, $T^3$ erstellt wird, statische Informationen über die Protokollzeilen $s_1$, ..., $s_n$, die diesem Zeitfenster $T^1$, $T^2$, $T^3$ zugeordnet sind. Die Abfolge dieser statischen Aufnahmen ist eine Zeitreihe, die Auskunft über die Entwicklung der Gruppenkarten $\mathbf{C}^1$, $\mathbf{C}^2$, $\mathbf{C}^3$ gibt, z. B. darüber, wie sich die Gesamtzahl an Gruppen $C^1_a$, $C^1_b$, $C^1_c$, $C^2_a$, $C^2_b$, $C^2_c$, $C^3_a$, $C^3_b$, $C^3_c$ in jeder Gruppenkarte $\mathbf{C}^1$, $\mathbf{C}^2$, $\mathbf{C}^3$ entwickelt. Aus dem Stand der Technik ist jedoch keine Möglichkeit bekannt, für einzelne Gruppen $C^1_a$, $C^1_b$, $C^1_c$, $C^2_a$, $C^2_b$, $C^2_c$, $C^3_a$, $C^3_b$, $C^3_c$ spezifische Informationen zu extrahieren, die für eine dynamische Anomalieerkennung nutzbar sind.

Es ist bei Betrachtung der Gruppen $C^1_a$, $C^1_b$, $C^1_c$, $C^2_a$, $C^2_b$, $C^2_c$ zweier Zeitfenster $T^1$, $T^2$ nicht ohne weiteres festzustellen, ob eine Gruppen $C^1_a$, $C^1_b$, $C^1_c$ der Gruppenkarte $\mathbf{C}^1$ des Zeitfensters $T^1$ in eine Gruppe $C^2_a$, $C^2_b$, $C^2_c$ der Gruppenkarte $\mathbf{C}^2$ des Zeitfensters $T^2$ transformiert wurde, da eine Anzahl von Protokollzeilen $s_1$, ..., $s_n$, die dem Zeitfenster $T^2$ zugeordnet sind, verwendet wurde, um die resultierende Gruppe $C^2_a$, $C^2_b$, $C^2_c$ zu generieren. Dies liegt daran, dass Protokollzeilen $s_1$, ..., $s_n$ nur einmal in einem bestimmten Zeitpunkt $t_0$, $t_1$, $t_2$, $t_3$ beobachtet werden. Um dieses Problem zu beseitigen, wird ein Ansatz zur dynamischen Analyse von Protokollzeilen $s_1$, ..., $s_n$ verwendet, der die zeitliche Entwicklung von Gruppen $C^1_a$, $C^1_b$, $C^1_c$, $C^2_a$, $C^2_b$, $C^2_c$, $C^3_a$, $C^3_b$, $C^3_c$ mittels Zeitreihenanalyse einbezieht.

Zum Auffinden der Zuordnungen werden daher im Zuordnungsschritt d) Zuordnungen von Protokollzeilen $s_1$, ..., $s_n$ eines jeweils betrachteten Zeitfensters $T^1$, $T^2$, $T^3$ zu Gruppen $C^1_a$, $C^1_b$, $C^1_c$, $C^2_a$, $C^2_b$, $C^2_c$, $C^3_a$, $C^3_b$, $C^3_c$ die jeweils benachbarten Zeitfenstern $T^1$, $T^2$, $T^3$ zugeordnet sind, ermittelt. Die Zuordnungen werden dabei ausgehend von einem betrachteten Zeitfenster $T^1$, $T^2$, $T^3$ vorzugsweise zu einem zeitlich, insbesondere unmittelbar, vorangehenden und/oder einem zeitlich, insbesondere unmittelbar, nachfolgenden Zeitfenster $T^1$, $T^2$, $T^3$, ermittelt. Dabei wird bevorzugt dieselbe Metrik verwendet, wie sie zur Zusammenfassung der einzelnen Protokollzeilen $s_1$, ..., $s_n$, eines jeweils betrachteten Zeitfenster $T^1$, $T^2$, $T^3$ zu Gruppen $C^1_a$, $C^1_b$, $C^1_c$, $C^2_a$, $C^2_b$, $C^2_c$, $C^3_a$, $C^3_b$, $C^3_c$ im Konstruktionsschritt c) angewendet werden. Grundsätzlich kann auch derselbe Schwellenwert verwendet werden wie im Konstruktionsschritt c), gegebenenfalls kann jedoch auch ein Ähnlichkeitsschwellenwert herangezogen werden, der geringer ist, als der im Konstruktionsschritt c) verwendete Ähnlichkeitsschwellenwert.

Um das Problem einer fehlenden Verbindung zwischen den Gruppenkarten $\mathbf{C}^1$, $\mathbf{C}^2$, $\mathbf{C}^3$ zu lösen, wird wie folgt vorgegangen: Jede Protokollzeile $s_1$, ..., $s_n$ wird nicht nur einer Gruppe $C^1_a$, $C^1_b$, $C^1_c$, $C^2_a$, $C^2_b$, $C^2_c$, $C^3_a$, $C^3_b$, $C^3_c$, zugeordnet, um die Gruppenkarte $\mathbf{C}^1$, $\mathbf{C}^2$, $\mathbf{C}^3$ des jeweils betrachteten Zeitfensters $T^1$, $T^2$, $T^3$ zu generieren, dem sie zugeordnet ist. Dieselbe Protokollzeile $s_1$, ..., $s_n$ wird auch einer Gruppenkarte $\mathbf{C}^1$, $\mathbf{C}^2$, $\mathbf{C}^3$ zugeordnet, die für die benachbarten, insbesondere das zeitlich vorangehende und das zeitlich nachfolgende, Zeitfenster $T^1$, $T^2$, $T^3$ erstellt werden.

Dabei werden den Protokollzeilen $s_1$, ..., $s_n$ denjenigen Gruppen $C^1_a$, $C^1_b$, $C^1_c$, $C^2_a$, $C^2_b$, $C^2_c$, $C^3_a$, $C^3_b$, $C^3_c$ aus den benachbarten Gruppenkarte $\mathbf{C}^1$, $\mathbf{C}^2$, $\mathbf{C}^3$ zugeordnet, die die der bearbeiteten Protokollzeile $s_1$, ..., $s_n$ ähnlichsten Protokollzeilen $s_1$, ..., $s_n$ enthalten. Der Zuordnungsschritt wird ebenfalls durch Anwendung des vorstehend angeführten Inkrementellen Clustering-Algorithmus durchgeführt. Dabei werden jedoch keine neuen Gruppen $C^1_a$, $C^1_b$, $C^1_c$, $C^2_a$, $C^2_b$, $C^2_c$, $C^3_a$, $C^3_b$, $C^3_c$ erzeugt und keine bestehenden Gruppen $C^1_a$, $C^1_b$, $C^1_c$, $C^2_a$, $C^2_b$, $C^2_c$, $C^3_a$, $C^3_b$, $C^3_c$ geändert, sondern nur zusätzliche Zuordnungen auf die den Gruppen $C^1_a$, $C^1_b$, $C^1_c$, $C^2_a$, $C^2_b$, $C^2_c$, $C^3_a$, $C^3_b$, $C^3_c$ zugewiesenen Protokollzeilen $s_1$, ..., $s_n$ gespeichert.

Anschließend werden, ausgehend von den im Konstruktionsschritt erstellten und in **Fig. 3** dargestellten Gruppen, Zuordnungen von Protokollzeilen $s_1$, ..., $s_5$ des Zeitfensters $T^1$ zu den Gruppen $C^2_a$, $C^2_b$ der Gruppenkarte $\mathbf{C}^2$ des Zeitfensters $T^2$ ermittelt und umgekehrt Zuordnungen der Protokollzeilen $s_6$, ..., $s_{11}$ des Zeitfensters $T^2$ zu den Gruppen $C^1_a$, $C^1_b$ der Gruppenkarte $\mathbf{C}^1$ des Zeitfensters $T^1$. Diese Zuordnungen zu Gruppen $C^1_a$, $C^1_b$, $C^2_a$, $C^2_b$ des jeweils zeitlich benachbarten Zeitfensters $T^1$, $T^2$ sind in **Fig. 3** durch strichlierte Linien angedeutet.

Zur Gruppe $C^1_a$ der Gruppenkarte $\mathbf{C}^1$ des Zeitfensters $T^1$ werden Zuordnungen bzw. Referenzen $R^1_{a,next}$ auf ihr aufgrund deren Ähnlichkeit zugeordnete Protokollzeilen $s_6$, $s_7$, $s_8$ aus dem zeitlich nachfolgenden Zeitfenster $T^2$ gespeichert. Derart werden auch für die Gruppe $C^1_b$ der Gruppenkarte $\mathbf{C}^1$ des Zeitfensters $T^1$ Zuordnungen $R^1_{b,next}$ auf ihr zugeordnete Protokollzeilen $s_{10}$, $s_{11}$ aus dem zeitlich nachfolgenden Zeitfenster $T^2$ gespeichert. Auf die gleiche Weise werden zur Gruppe $C^2_a$ der Gruppenkarte $\mathbf{C}^2$ des Zeitfensters $T^2$ Zuordnungen $R^2_{a,prev}$ auf ihr zugeordnete Protokollzeilen $s_1$, $s_2$ aus dem zeitlich vorangehenden Zeitfenster $T^1$ gespeichert und für die Gruppe $C^2_b$ der Gruppenkarte $\mathbf{C}^2$ Zuordnungen $R^2_{b,prev}$ auf ihr zugeordnete Protokollzeilen $s_3$, $s_4$ aus dem zeitlich vorangehenden Zeitfenster $T^1$ gespeichert.

Dabei kann eine Protokollzeile $s_1$, ..., $s_n$, die beim Auftreten eines Ereignisses erstellt wurde, in zeitlich benachbarten Zeitfenstern $T^1$, $T^2$, $T^3$ auch Gruppen $C^1_a$, $C^1_b$, $C^1_c$, $C^2_a$, $C^2_b$, $C^2_c$, $C^3_a$, $C^3_b$, $C^3_c$ zugeordnet wird, die jeweils Protokollzeilen $s_1$, ..., $s_n$ umfassen, die für voneinander verschiedene Arten von Ereignissen erstellt wurden, oder es kann für eine Protokollzeile $s_1$, ..., $s_n$ keine Zuordnung zu einer Gruppe $C^1_a$, $C^1_b$, $C^1_c$, $C^2_a$, $C^2_b$, $C^2_c$, $C^3_a$, $C^3_b$, $C^3_c$ eines zeitlich benachbarten Zeitfensters $T^1$, $T^2$, $T^3$ gefunden werden.

Im gezeigten Ausführungsbeispiel wird beispielsweise die Protokollzeile $s_3$ des der Gruppe $C^1_a$ der Gruppenkarte $\mathbf{C}^1$ des Zeitfensters $T_1$ und der Gruppe $C^2_b$ der Gruppenkarte $\mathbf{C}^2$ des Zeitfensters $T^2$ zugeordnet. Für die Protokollzeile $s_5$ werden keine Zuordnungen zu den Gruppen $C^2_a$, $C^2_b$ des Zeitfensters $T^2$ und für die Protokollzeile $s_9$ werden keine Zuordnungen zu den Gruppen $C^1_a$, $C^1_b$ des Zeitfensters $T_1$ gefunden, sodass diese Protokollzeilen $s_5$, $s_9$ jeweils Ausreißer für die Gruppenkarten $\mathbf{C}^1$, $\mathbf{C}^2$ des jeweils benachbarten Zeitfensters $T^1$, $T^2$ darstellen.

Der genaue Inhalt einer jeweiligen Protokollzeile $s_1$, ..., $s_n$ ist nicht notwendigerweise eindeutig. Daher wird vorzugsweise eine laufende Identifikationsnummer (ID) zur eindeutigen Identifizierung für das Speichern von Zuordnungen bzw. Referenzen auf die Protokollzeile $s_1$, ..., $s_n$ verwendet. Weiters wird die Generierung der Gruppenkarte $\mathbf{C}^1$,

$C^2$, $C^3$ bei einem erfindungsgemäßen Verfahren jeweils einen Schritt im Voraus für das zeitlich nachfolgende Zeitfenster $T^1$, $T^2$, $T^3$ durchgeführt, da die Gruppenkarte $C^1$, $C^2$, $C^3$ des nachfolgenden Zeitfensters $T^1$, $T^2$, $T^3$ andernfalls noch nicht existiert.

**Allokationsschritt**

Nachdem im Zuordnungsschritt d) Zuordnungen von den einzelnen Protokollzeilen $s_1$, ..., $s_n$ zu den jeweiligen Gruppen nachfolgender Zeitabschnitte gefunden wurden, werden im folgenden Allokationsschritt einzelne Gruppen $C^1_a$, $C^1_b$, $C^1_c$, $C^2_a$, $C^2_b$, $C^2_c$, $C^3_a$, $C^3_b$, $C^3_c$ über mehrere Zeitfenster $T^1$, $T^2$, $T^3$ hinweg einander zugeordnet. Dabei wird angenommen, dass die betreffenden Gruppen jeweils Protokollzeilen mit ähnlichem Inhalt aufweisen und derart die zeitliche Entwicklung bzw der zeitliche Verlauf der Gruppen erfasst werden kann.

Im Allokationsschritt werden Zuordnungen zwischen den Gruppen $C^1_a$, $C^1_b$, $C^1_c$, $C^2_a$, $C^2_b$, $C^2_c$, $C^3_a$, $C^3_b$, $C^3_c$ einer Gruppenkarte $C^1$, $C^2$, $C^3$ eines jeweils betrachteten Zeitfensters $T^1$, $T^2$, $T^3$ und den Gruppen $C^1_a$, $C^1_b$, $C^1_c$, $C^2_a$, $C^2_b$, $C^2_c$, $C^3_a$, $C^3_b$, $C^3_c$ einer Gruppenkarte $C^1$, $C^2$, $C^3$, die während eines zeitlich, insbesondere unmittelbar, vorangehenden oder, insbesondere unmittelbar, nachfolgenden Zeitfensters $T^1$, $T^2$, $T^3$ erstellt wurden, bestimmt.

Im gezeigten Ausführungsbeispiel ist zur Nachverfolgung einzelner Gruppen $C^1_a$, $C^1_b$, $C^2_a$, $C^2_b$ über die Zeit-fenster $T^1$, $T^2$ hinweg für jede Gruppe $C^1_a$, $C^1_b$ der Gruppenkarte $C^1$ und jede Gruppe $C^2_a$, $C^2_b$ der Gruppenkarte $C^2$ eine Metrik erforderlich, die die Wahrscheinlichkeit einer Umwandlung von Gruppen $C^1_a$, $C^1_b$ der Gruppenkarte $C^1$ zu Gruppen $C^2_a$, $C^2_b$ der Gruppenkarte $C^2$ beschreibt. Diese Metrik gibt an, ob die jeweiligen Gruppen $C^1_a$, $C^1_b$, $C^2_a$, $C^2_b$ der Gruppenkarten $C^1$, $C^2$ durch ähnliche Ereignisse bzw. ähnliche, aufgrund dieser Ereignisse erzeugte, Protokollzeilen $s_1$, ..., $s_n$ erzeugt wurden. Eine intuitive Metrik, die die Verwandtschaft der jeweiligen Gruppen $C^1_a$, $C^1_b$, $C^2_a$, $C^2_b$ der Gruppenkarten $C^1$, $C^2$ beschreibt, wird bei einem erfindungsgemäßen Verfahren durch den Anteil der jeweiligen Gruppen $C^1_a$, $C^1_b$, $C^2_a$, $C^2_b$ der beiden Gruppenkarten $C^1$, $C^2$ gemeinsamen Elemente bzw. Protokollzeilen $s_1$, ..., $s_n$ bereitgestellt.

Da es nicht möglich ist, identische Protokollzeilen $s_1$, ..., $s_n$ einer jeden Gruppe $C^1_a$, $C^1_b$, $C^1_c$, $C^2_a$, $C^2_b$, $C^2_c$, $C^3_a$, $C^3_b$, $C^3_c$ zu identifizieren, wird das zuvor eingeführte Gruppenmodell, das Zuordnungen bzw. Referenzen auf die Protokollzeilen $s_1$, ..., $s_n$ zeitlich benachbarter Zeitfenster $T^1$, $T^2$, $T^3$ enthält, verwendet.

In einem Schritt e) wird eine Überlappungskennzahl gebildet, engl. Overlap, die auf dem Jaccard-Koeffizienten für binäre Mengen basiert. Der Jaccard-Koeffizient wird beispielsweise beschrieben in D. Greene, D. Doyle, P. Cunningham, "Tracking the Evolution of Communities in Dynamic Social Networks", International Conference on Advances in Social Networks Analysis and Mining, pages 176-183, 2010. Für das erfindungsgemäße Gruppenmodell wurde der Jaccard-Koeffizient durch folgende Formulierung angepasst:

$$overlap(C^i, C^{i+1}) = \frac{\left|\left(R^i_{curr} \cap R^{i+1}_{prev}\right) \cup \left(R^i_{next} \cap R^{i+1}_{curr}\right)\right|}{\left|R^{i+1}_{curr} \cup R^{i+1}_{prev} \cup R^i_{next} \cup R^i_{curr}\right|}$$

Die in **Fig. 3** dargestellte Menge $R^1_{a,curr}$ umfasst dabei die Protokollzeilen $s_1$, $s_2$, $s_3$, die im Konstruktionsschritt c) der Gruppe $C^1_a$ zum Zeitfenster $T^1$ zugeordnet wurden. Die Menge $R^1_{b,curr}$ umfasst die Protokollzeilen $s_4$, $s_5$, die im Konstruktionsschritt c) der Gruppe $C^1_b$ zum Zeitfenster $T^1$ zugeordnet wurden.

Die Menge $R^2_{a,curr}$ umfasst die Protokollzeilen $s_6$, $s_7$, $s_8$, $s_9$, die im Konstruktionsschritt c) der Gruppe $C^2_a$ zum Zeitfenster $T^2$ zugeordnet wurden. Die Menge $R^2_{b,curr}$ umfasst die Protokollzeilen $s_{10}$, $s_{11}$, die im Konstruktionsschritt c) der Gruppe $C^2_b$ zum Zeitfenster $T^2$ zugeordnet wurden.

Die Menge $R^2_{a,prev}$ umfasst die Protokollzeilen $s_1$, $s_2$ zum Zeitfenster $T^1$, die im Zuordnungsschritt der Gruppe $C^2_a$ des Zeitfensters $T^2$ zugeordnet wurden. Die Menge $R^2_{b,prev}$ umfasst die Protokollzeilen $s_3$, $s_4$, zum Zeitfenster $T^1$, die im Zuordnungsschritt der Gruppe $C^2_b$ des Zeitfensters $T^2$ zugeordnet wurden.

Die Menge $R^1_{a,next}$ umfasst die Protokollzeilen $s_6$, $s_7$, $s_8$ zum Zeitfenster $T^2$, die im Zuordnungsschritt der Gruppe $C^1_a$ des Zeitfensters $T^1$ zugeordnet wurden. Die Menge $R^1_{b,next}$ umfasst die Protokollzeilen $s_{10}$, $s_{11}$, zum Zeit-fenster $T^2$, die im Zuordnungsschritt der Gruppe $C^1_b$ des Zeitfensters $T^1$ zugeordnet wurden.

Zur Bestimmung der Überlappungskennzahl $overlap(C^1_a, C^2_a)$ der beiden Gruppen $C^1_a$, $C^2_a$ wird folgende Be-rechnung durchgeführt:

$$overlap(C^1_a, C^2_a) = \frac{\left|(\{s_1, s_2, s_3\} \cap \{s_1, s_2\}) \cup (\{s_6, s_7, s_8, s_9\} \cap \{s_6, s_7, s_8\})\right|}{\left|\{s_1, s_2, s_3\} \cup \{s_1, s_2\} \cup \{s_6, s_7, s_8, s_9\} \cup \{s_6, s_7, s_8\}\right|}$$

$$= \frac{\left|\{s_1, s_2, s_6, s_7, s_8\}\right|}{\left|\{s_1, s_2, s_3, s_6, s_7, s_8, s_9\}\right|} = \frac{5}{7} \approx 0.714$$

Entsprechend können die Überlappungskennzahlen für die übrigen Kombinationen von Gruppen aus benachbarten Zeitfenstern $T^1$, $T^2$ wie folgt ermittelt werden:

overlap($C^1_b$, $C^2_a$) = 0
overlap($C^1_a$, $C^2_b$) = 1/9 = 0.111
overlap($C^1_b$, $C^2_b$) = 3/5 = 0.6

Die Überlappungskennzahl liegt jedenfalls im Intervall [0,1], wobei 1 bedeutet, dass alle Protokollzeilen $s_1$, ..., $s_n$, die einer der beiden jeweils betrachteten Gruppen $C^1_a$, $C^1_b$, $C^2_a$, $C^2_b$ zugeordnet wurden, auch der jeweils anderen Gruppe $C^1_a$, $C^1_b$, $C^2_a$, $C^2_b$ zugeordnet wurden, was einer perfekten Übereinstimmung entspricht. Andererseits bedeutet 0, dass keine der Protokollzeilen $s_1$, ..., $s_n$, die einer der beiden jeweils betrachteten Gruppen $C^1_a$, $C^1_b$, $C^2_a$, $C^2_b$ zugeordnet wurden, auch der jeweils anderen der betrachteten Gruppen $C^1_a$, $C^1_b$, $C^2_a$, $C^2_b$ zugeordnet wurde, was auf eine Fehlanpassung hinweist.

Anschließend an die Bildung der Überlappungskennzahl wird nunmehr die Entwicklung von einzelnen Gruppen $C^1_a$, $C^1_b$, $C^1_c$, $C^2_a$, $C^2_b$, $C^2_c$, $C^3_a$, $C^3_b$, $C^3_c$ über mehrere Zeitfenster $T^1$, $T^2$, $T^3$ hinweg untersucht.

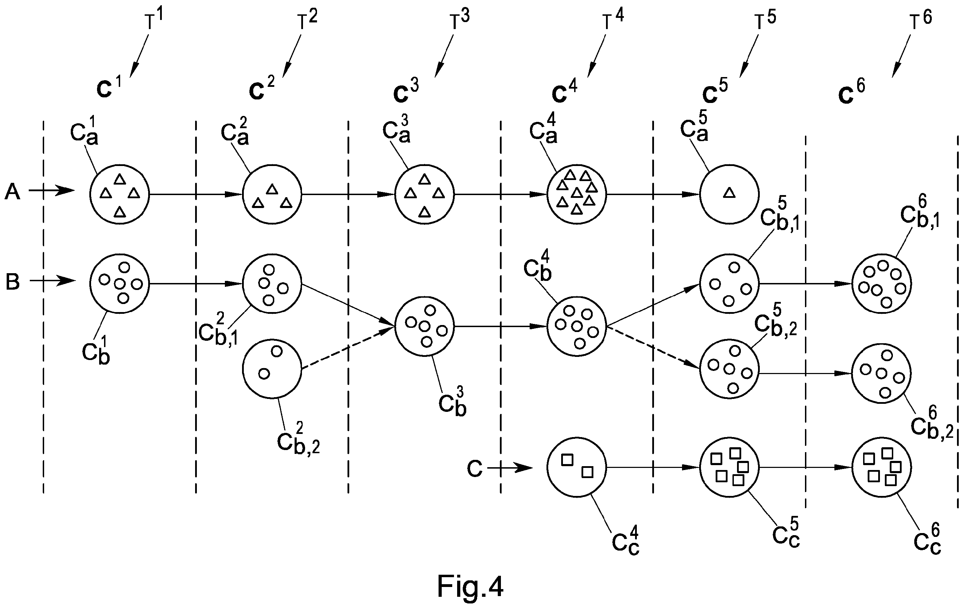

In einer vereinfachten Darstellung (**Fig. 4**), bei der Gruppen $C^1_a$, $C^1_b$, $C^1_c$, $C^2_a$, $C^2_b$, $C^2_c$, $C^3_a$, $C^3_b$, $C^3_c$ über einen längeren Zeitraum sehr stabil bleiben, ist diese Vorgangsweise geeignet, alle Gruppen $C^1_a$, $C^1_b$, $C^1_c$, $C^2_a$, $C^2_b$, $C^2_c$, $C^3_a$, $C^3_b$, $C^3_c$ individuell zu verfolgen. In realistischen Szenarien mit sich ändernden Umgebungen durchlaufen Gruppen $C^1_a$, $C^1_b$, $C^1_c$, $C^2_a$, $C^2_b$, $C^2_c$, $C^3_a$, $C^3_b$, $C^3_c$ jedoch häufig Veränderungen bzw. Transitions, wie z. B. Teilungen oder Fusionen, die die Überlappungskennzahl negativ beeinflussen und Anomalien kennzeichnen. Daher wird bei einem erfindungsgemäßen Verfahren das Nachverfolgen bzw. Tracking von Gruppen $C^1_a$, $C^1_b$, $C^1_c$, $C^2_a$, $C^2_b$, $C^2_c$, $C^3_a$, $C^3_b$, $C^3_c$ um einen Mechanismus zur Handhabung von Übergängen bzw. Transitions erweitert.

Die Struktur und Zusammensetzung von Gruppen $C^1_a$, $C^1_b$, $C^1_c$, $C^2_a$, $C^2_b$, $C^2_c$, $C^3_a$, $C^3_b$, $C^3_c$ können sich im Laufe der Zeit ändern. Diese Veränderungen sind zum einen Indikator für ein anomales Systemverhalten und damit relevant für die Erkennung von Anomalien. Andererseits ergeben sich Schwierigkeiten bei der Nachverfolgung von Gruppen $C^1_a$, $C^1_b$, $C^1_c$, $C^2_a$, $C^2_b$, $C^2_c$, $C^3_a$, $C^3_b$, $C^3_c$, da diese Änderungen typischerweise die Überlappungskennzahl zwischen den Gruppen $C^1_a$, $C^1_b$, $C^1_c$, $C^2_a$, $C^2_b$, $C^2_c$, $C^3_a$, $C^3_b$, $C^3_c$ beeinflussen.

In einem weiteren Verfahrensschritt f) werden einzelne Gruppen in benachbarten Zeitfenstern einander zugeordnet. Diese Zuordnungen bilden die Grundlage für die spätere Verfolgung von Gruppen mit Protokollzeilen mit ähnlichen Inhalten über längere Zeiträume hinweg.

Um eine Zuordnung zwischen benachbarten Gruppen zu schaffen, wird im Folgenden ein erster Schwellenwert $\theta$ für die Überlappungskennzahl, sowie ein zweiter Schwellenwert für Teilüberschneidungen $\theta_{part}$, der für Teilungen und Fusionen relevant ist, festgelegt. Im Allgemeinen wird die Überlappungskennzahl bei Teilungen und Fusionen kleiner, da es nur zu Teilüberschneidungen mit den neu entstandenen Gruppen $C^1_a$, $C^1_b$, $C^1_c$, $C^2_a$, $C^2_b$, $C^2_c$, $C^3_a$, $C^3_b$, $C^3_c$ kommt. Deshalb wird erfindungsgemäß $\theta_{part} < \theta$ gewählt. Typische Werte für $\theta$ und $\theta_{part}$ sind:

$0,5 < \theta < 0,8$
$0,1 < \theta_{part} < 0,4$

Die Zuordnungen können auf unterschiedliche Weise erfolgen, wobei folgende typische Szenarien auftreten können:

- Survival: Eine Gruppe $C^1_a$ "überlebt" und verwandelt sich in eine Gruppe $C^2_a$ wenn $overlap(C^1_a, C^2_a) > \theta$ und es existiert keine andere Gruppe $B^1 \in \mathcal{C}^1$ oder $B^2 \in \mathcal{C}^2$, sodass $overlap(B^1, C^2_a) > \theta_{part}$ oder $overlap(C^1_a, B^2) > \theta_{part}$.

- Teilung (**Fig. 4**): Jeweils eine Gruppe $C^4_b$ teilt sich in p Gruppen $C^5_{b,1}$ $C^5_{b,2}$ auf, wenn diese ein Minimum an Ähnlichkeit mit der ursprünglichen Gruppe $C^4_b$ aufweisen, d. h. $overlap(C^4_b, C^5_{b,1}) > \theta_{part}$ und $overlap(C^4_b, C^5_{b,2}) > \theta_{part}$, und die Vereinigung aller Teile mit der ursprünglichen Gruppe $C^4_b$ ein Minimum an Ähnlichkeit aufweist, d. h. $overlap(C^4_b, C^5_{b,1} \cup C^5_{b,2}) > \theta$. In diesem Fall besteht keine andere Gruppe $C^5_a$, $C^5_c$, die eine Überlappungskennzahl größer als $\theta_{part}$ mit einer der beteiligten Gruppen aufweist.

- Fusion (**Fig. 4**): Die Menge der Gruppen $C^2_{b,1}$, $C^2_{b,2}$ vereinigt sich zu einer größeren Gruppe $C^3_b$, wenn alle Teilgruppen eine minimale Ähnlichkeit mit der resultierenden Gruppe $C^3_b$ aufweisen, d. h. $overlap(C^2_{b,1}, C^3_b) > \theta_{part}$

und $overlap(C^2_{b,2}, C^3_b) > \theta_{part}$ und die Vereinigung aller Teile mit der resultierenden Gruppe $C^3_b$ ein Minimum

an Ähnlichkeit aufweist, d.h. $overlap(C^2_{b,1} \cup C^2_{b,2}, C^3_b) > \theta$. Auch gibt es in diesem Fall keine andere Gruppe $C^3_a$ die eine Überschneidung größer als $\theta_{part}$ mit einer der beteiligten Gruppen $C^2_{b,1}$, $C^2_{b,2}$ hat.

- Verschwinden oder Erscheinen: Eine Gruppe $C^5_a$ verschwindet oder eine Gruppe $C^4_c$ taucht auf, wenn keiner der oben genannten Fälle zutrifft.

Durch diese Vorgangsweise ist es nicht möglich, dass eine Verbindung zwischen Gruppen $C^1_a$, $C^1_b$, $C^1_c$, $C^2_a$, $C^2_b$, $C^2_c$ zweier Gruppenkarten **C**$^1$, **C**$^2$ hergestellt wird, wenn deren Überlappungskennzahl den zweiten Schwellenwert $\theta_{part}$ nicht überschreitet. Dies verhindert, dass Teilgruppen, deren Überlappungskennzahl diesen zweiten Schwellenwert $\theta_{part}$ nicht überschreitet, im Falle einer Teilung bzw. eines Splits oder einer Fusion zu der aggregierten Gruppe $C^1_a$, $C^1_b$, $C^1_c$, $C^2_a$, $C^2_b$, $C^2_c$ beitragen.

Auf diese Weise werden in einem Pfadbildungsschritt g) die einzelnen Gruppen miteinander über Zuordnungen verbunden. Es werden derart einzelne gerichtete Pfade A, B, C erstellt, als deren Knoten die jeweiligen einander über Zuordnungen zugeordneten Gruppen $C^1_a$, $C^1_b$, $C^1_c$, $C^2_a$, $C^2_b$, $C^2_c$, $C^3_a$, $C^3_b$, $C^3_c$ fungieren und als deren Kanten die zuvor beschriebenen Zuordnungen fungieren. Die Pfade ermöglichen es, das Auftreten und die Änderung des Auftretens bestimmter Arten von Protokollzeilen über die Zeit zu verfolgen.

Um einzelne über einen Pfad zusammengefasste Gruppen $C^1_a$, $C^1_b$, $C^1_c$, $C^2_a$, $C^2_b$, $C^2_c$, $C^3_a$, $C^3_b$, $C^3_c$ über die Zeit zu verfolgen, kann es vorteilhaft sein, den betreffenden Pfad, der die Entwicklung einer betrachteten Gruppe $C^1_a$, $C^1_b$, $C^1_c$, $C^2_a$, $C^2_b$, $C^2_c$, $C^3_a$, $C^3_b$, $C^3_c$ angibt, auch dann weiter zu verfolgen, wenn eine Teilung oder Fusion stattfindet. Vorteilhaft werden dabei Pfade basierend auf ihrer erreichten Überlappungskennzahl, der Gruppengröße, der Zeitspanne, die eine jeweils betrachtete Gruppe $C^1_a$, $C^1_b$, $C^1_c$, $C^2_a$, $C^2_b$, $C^2_c$, $C^3_a$, $C^3_b$, $C^3_c$ bereits existiert, oder einer Kombinationen dieser Faktoren, verwendet.

## Ausführungsbeispiel

Anhand des in **Fig. 4** gezeigten Ausführungsbeispiels wird die vorgestellte Methode schrittweise erläutert. Die dazu verwendete exemplarische Protokolldatei 4 mit Protokollzeilen $s_1$, ..., $s_n$ ist in **Tabelle 1** dargestellt. In **Fig. 4** sind sechs Zeitfenster $T^1$, ..., $T^6$ dargestellt, in denen die Entwicklung von Gruppen $C^1_a$, $C^1_b$, $C^2_a$, $C^2_{b,1}$, $C^2_{b,2}$, $C^3_a$, $C^3_b$, $C^4_a$, $C^4_b$, $C^4_c$, $C^5_a$, $C^5_{b,1}$, $C^5_{b,2}$ $C^5_c$, $C^6_{b,1}$, $C^6_{b,2}$ $C^s_c$ nachverfolgbar ist.

Im Folgenden werden die Protokollzeilen $s_0$ bis $s_{74}$ durch eine Protokollzeilen-Identifikationsnummer referenziert. Bei den Protokollzeilen $s_1$, ..., $s_{74}$ handelt es sich um Beispiele für typische Apache-Log-Linien. Im Beispiel werden drei Arten von Protokollzeilen $s_1$, ..., $s_n$ verwendet, die durch Symbole gekennzeichnet sind:

- ○: Ein erfolgreicher Dateizugriff über HTTP.
- Δ: Eine Fehlermeldung, die durch einen Authentifizierungsfehler verursacht wurde.
- □: Eine Fehlermeldung, die durch einen deformierten Host-Header verursacht wurde.

Die Protokolldatei 4 erstreckt sich über einen Zeitraum von sechs Minuten. Für die folgenden Berechnungen wird eine Zeitfensterlänge von einer Minute gewählt.

Innerhalb jedes Zeitfensters $T^1$, ..., $T^6$ werden mittels des oben angeführten Inkrementellen Clustering-Algorithmus die Protokollzeilen $s_1$, ..., $s_{74}$ entsprechend der Ähnlichkeit ihrer Zeichenketten bzw. Strings gruppiert. Dazu wird die Levenshtein-Distanz $d_{Lev}(a,b)$ verwendet, um den Abstand zwischen beliebigen Strings a und b zu berechnen. Dabei wird die Distanz normalisiert, indem sie durch die Länge der längeren Zeichenkette dividiert wird, also durch $max(|a|, |b|)$. Die normalisierte Ähnlichkeit zweier Zeichenketten wird somit berechnet durch:

$$1 - \frac{d_{Lev}(a,b)}{max(|a|,|b|)}.$$

Die erreichte Ähnlichkeit wird dann mit einem vordefinierten Schwellenwert verglichen, der im gezeigten Ausführungsbeispiel mit 0,9 festgelegt wurde. Beispielsweise erreicht die Protokollzeile $s_0$ einen hohen Ähnlichkeitswert von 0,98 zur ähnlichen Protokollzeile $s_1$, jedoch nur einen niedrigen Ähnlichkeitswert von 0,15 zur Protokollzeile $s_2$.

**Fig. 4** gibt einen Überblick über die Gruppenkarten $C^1$, ..., $C^6$ die in jedem Zeitfenster $T^1$, ..., $T^6$ gebildet wurden. Im ersten Zeitfenster $T^1$ zwischen $t_0$ und $t_1$ werden zwei Gruppen $C^1_a$, $C^1_b$ die den Ereignistypen $\triangle$ und $\bigcirc$ entsprechen, durch die Protokollzeilen $s_0$, ..., $s_8$ gebildet. Die Gruppe $C^1_a$ enthält $R^1_{a,curr} = \{s_2, s_5, s_7, s_8\}$ und Gruppe $C^1_b$ enthält $R^1_{b,curr} = \{s_0, s_1, s_3, s_4, s_6\}$.

Für das nächste Zeitfenster $T_2$ wird eine Gruppenkarte $C^2_a$ basierend auf den Zeilen $s_9$, ..., $s_{17}$ erstellt. Hier gibt es zwei Gruppen $C^2_b$ vom Ereignistyp $\bigcirc$. Der Grund dafür ist, dass die Ähnlichkeit der Zeilen $s_9$ und $s_{10}$ nur 0,88 beträgt und dadurch zwei getrennte Gruppen $C^2_{b,1}$, $C^2_{b,2}$ erzeugt wurden. Alle Gruppen der Gruppenkarte $C^1$ und ihre referenzierten Protokollzeilen bzw. Elemente sind dementsprechend: $C^2_a$ mit $R^2_{a,curr} = \{s_{11}, s_{16}, s_{17}\}$, $C^2_{b,1}$ mit $R^2_{b,1,curr} = \{s_{10}, s_{12}, s_{13}, s_{15}\}$ und $C^2_{b,2}$ mit $R^2_{b,2,curr} = \{s_9, s_{14}\}$. Diese Zuordnungen bzw. Zuweisungen werden im Konstruktionsschritt c) vorgenommen.

In der Zuordnungsphase d) werden nun die Protokollzeilen $s_1$, ..., $s_{74}$, die die Gruppen $C^2_a$, $C^2_{b,1}$, $C^2_{b,2}$ der Gruppenkarte $C^2$ erzeugt haben, auch den Gruppen $C^1_a$, $C^1_b$ in der Gruppenkarte $C^1$ zugewiesen. Dies ergibt folgende zusätzliche Zuordnungen bzw. Referenzen: Gruppe $C^1_a$ erhält $R^1_{a,next} = \{s_{11}, s_{16}, s_{17}\}$ und Gruppe $C^1_b$ erhält $R^1_{b,next} = \{s_9, s_{10}, s_{12}, s_{13}, s_{15}\}$.

Ebenso wird die Zuordnung in umgekehrter Richtung durchgeführt, sodass die Protokollzeilen der Gruppenkarte $C^1$ einzelnen Gruppen in der Gruppenkarte $C^2$ zugeordnet werden. Daraus ergeben sich die folgenden zusätzlichen Referenzen: Gruppe $C^2_a$ erhält $R^2_{a,prev} = \{s_2, s_5, s_7, s_8\}$, eine Gruppe $C^2_{b,1}$ erhält $R^2_{b,1,prev} = \{s_0, s_1, s_3, s_4, s_6\}$ und die andere Gruppe $C^2_{b,2}$ erhält $R^2_{b,2,prev} = \emptyset$.

Mit diesen Werten ist es möglich, die Übergänge zwischen den Gruppen $C^1_a$, $C^1_b$ der Gruppenkarte $C^1$ nach den Gruppen $C^2_a$, $c^2_{b,1}$, $C^2_{b,2}$ der Gruppenkarte $C^2$ zu bestimmen. Dazu wird die Überlappungskennzahl für alle möglichen Verbindungen zwischen den Gruppen $C^1_a$, $C^1_b$ $C^2_a$, $C^2_{b,1}$, $C^2_{b,2}$ berechnet. Die Überlappungskennzahl zwischen den Gruppen $C^1_a$ und $C^2_a$ beträgt

$$
\begin{aligned}
overlap(C^1_a, C^2_a) &= \frac{\left|\left(R^1_{a,curr} \cap R^2_{a,prev}\right) \cup \left(R^1_{a,next} \cap R^2_{a,curr}\right)\right|}{\left|R^2_{a,curr} \cup R^2_{a,prev} \cup R^1_{a,next} \cup R^1_{a,curr}\right|} \\[2mm]
&= \frac{\left|\left(\{s_2, s_5, s_7, s_8\} \cap \{s_2, s_5, s_7, s_8\}\right) \cup \left(\{s_{16}, s_{17}, s_{11}\} \cap \{s_{16}, s_{17}, s_{11}\}\right)\right|}{\left|\{s_{16}, s_{17}, s_{11}\} \cup \{s_2, s_5, s_7, s_8\} \cup \{s_{16}, s_{17}, s_{11}\} \cup \{s_2, s_5, s_7, s_8\}\right|} \\[2mm]
&= \frac{\left|\{s_2, s_5, s_7, s_8\} \cup \{s_{16}, s_{17}, s_{11}\}\right|}{\left|\{s_2, s_5, s_7, s_8, s_{16}, s_{17}, s_{11}\}\right|} \\[2mm]
&= \frac{\left|\{s_2, s_5, s_7, s_8, s_{16}, s_{17}, s_{11}\}\right|}{\left|\{s_2, s_5, s_7, s_8, s_{16}, s_{17}, s_{11}\}\right|} = \frac{8}{8} = 1
\end{aligned}
$$

Gemäß dem Algorithmus zur Erkennung von Übergängen beträgt die Überlappungskennzahl zwischen zwei Gruppen mindestens $\theta_{part}$, damit der Übergang als Kandidat für eine Teilung bzw. einen Split oder eine Fusion aufgenommen wird, und die aggregierte Überlappungskennzahl beträgt mindestens $\theta$, damit sie endgültig zur Menge der Übergänge hinzugefügt wird.

Im gezeigten Ausführungsbeispiel sind $\theta_{part} = 0,2$ und $\theta = 0,7$ festgelegt. Die Gruppen $C^1_a$ und $C^2_a$ erreichen die höchstmöglichen Überlappungskennzahl von 1, d.h. alle Protokollzeilen, die der Gruppe $C^1_a$ zugeordnet wurden, wurden auch der Gruppe $C^2_a$ zugeordnet und umgekehrt. Damit wird die Verbindung zwischen den beiden Gruppen $C^1_a$ und $C^2_a$ sofort hergestellt.

Alle anderen Kombinationen von Gruppen aus zwei benachbarten Gruppenkarten werden analog berechnet.

Im gezeigten Ausführungsbeispiel ergibt sich beispielsweise keine perfekte Überlappung für die $C^1_b$ und $C^2_{b,1}$:

$$overlap(C^1_b, C^2_{b,1}) = \frac{\left|\left(R^1_{b,curr} \cap R^2_{b,1,prev}\right) \cup \left(R^1_{b,next} \cap R^2_{b,1,curr}\right)\right|}{\left|R^2_{b,1,curr} \cup R^2_{b,1prev} \cup R^1_{b,next} \cup R^1_{b,curr}\right|}$$

$$= \frac{\left|(\{s_0, s_1, s_3, s_4, s_6\} \cap \{s_0, s_1, s_3, s_4, s_6\}) \cup (\{s_9, s_{10}, s_{12}, s_{13}, s_{15}\} \cap \{s_{10}, s_{12}, s_{13}, s_{15}\})\right|}{\left|\{s_{10}, s_{12}, s_{13}, s_{15}\} \cup \{s_0, s_1, s_3, s_4, s_6\} \cup \{s_9, s_{10}, s_{12}, s_{13}, s_{15}\} \cup \{s_{10}, s_{12}, s_{13}, s_{15}\}\right|}$$

$$= \frac{\left|\{s_0, s_1, s_3, s_4, s_6\} \cup \{s_{10}, s_{12}, s_{13}, s_{15}\}\right|}{\left|\{s_0, s_1, s_3, s_4, s_6, s_9, s_{10}, s_{12}, s_{13}, s_{15}\}\right|}$$

$$= \frac{\left|\{s_0, s_1, s_3, s_4, s_6, s_{10}, s_{12}, s_{13}, s_{15}\}\right|}{\left|\{s_0, s_1, s_3, s_4, s_6, s_9, s_{10}, s_{12}, s_{13}, s_{15}\}\right|} = \frac{9}{10} = 0.9$$

Auch hier ist die Überlappungskennzahl hoch genug, sodass die Verbindung zwischen den Gruppen $C^1_b$ und $C^2_{b,1}$ sofort hergestellt wird. Der Grund, warum in diesem Fall keine perfekte Überlappung von 1 erreicht wurde, liegt darin, dass die Protokollzeile $s_9$ der Gruppe $C^2_{b,2}$ anstatt der Gruppe $C^2_{b,1}$ zugeordnet wurde und dadurch in der Schnittmenge fehlt. Die letzte relevante Überschneidung zwischen Gruppe $C^1_b$ und Gruppe $C^2_{b,2}$ ist

$$overlap(C^1_b, C^2_{b,2}) = \frac{|\{s_9\}|}{|\{s_0, s_1, s_3, s_4, s_6, s_9, s_{10}, s_{12}, s_{13}, s_{14}, s_{15}\}|} = \frac{1}{11} \approx 0.09$$

und daher nicht hoch genug, um als Kandidat für einen Übergang in Betracht gezogen zu werden, da die Überlappungskennzahl $\theta_{part}$ nicht übersteigt. Dies hat zwei Gründe: Erstens wurde die Protokollzeile $s_{14}$, die in der Gruppe $C^2_{b,2}$ enthalten ist, nicht in $R^1_{b,next}$ zugeteilt, da sie zu wenig Ähnlichkeit mit den Gruppen-Repräsentanten hatte und somit einen Ausreißer bildete, d.h. keiner Gruppe zugeordnet war. Zweitens wurde keine der Protokollzeilen der Gruppe $C^1_b$ in $R^2_{b,2,prev}$ zugewiesen. Alle übrigen Kombinationen von Gruppen ergeben eine Überlappungskennzahl von 0.

Analog werden diese Berechnungen auch zwischen den Gruppenkarten $C^2$, $C^3$ durchgeführt. Die Überlappungskennzahl zwischen $C^2_a$ und $C^3_a$ ist wieder 1. Die hier ermittelten Übergänge von $C^2_{b,1}$ und $C^2_{b,2}$ nach $C^3_b$, stellen eine Fusion dar. Dies ist folgendermaßen erklärbar: Zuerst stellt $overlap(C^2_{b,1}, C^3_b) \approx 0.73 > \theta$ eine Verbindung zwischen den beiden Gruppen $C^2_{b,1}$ und $C^3_b$ her. Allerdings ist auch $overlap(C^2_{b,2}, C^3_b) \approx 0.27 > \theta_{part}$, sodass Gruppe $C^2_{b,2}$ einen ausreichend großen Anteil zur resultierenden Gruppe $C^3_b$ beiträgt und daher auch ein Übergang zwischen den beiden hinzugefügt wird. Dementsprechend gibt es zwei Verbindungen zur Gruppe $C^3_b$.

Derartige Konstellationen machen es jedoch schwerer, den Verlauf eines einzelnen Gruppentyps zu bestimmen. Das ist dadurch bedingt, dass Teilungen und Fusionen beliebig viele Verzweigungen zwischen den Gruppen ermöglichen. Vorteilhaft kann daher eine Entscheidungsregel angewendet werden, die festlegt, welcher Pfad beim Nachverfolgen bzw. Tracking einer Gruppe bzw eines Pfads verfolgt wird. Dabei kann beispielsweise vorgesehen sein, dass der Pfad $B_1$ mit der größten berechneten Überlappungskennzahl und nicht Pfad $B_2$ bevorzugt wird. Im Fall von Gruppe $C^3_b$ wird damit $C^2_{b,1}$ und nicht $C^2_{b,2}$ als Vorgänger ausgewählt. Um dies zu verdeutlichen, werden die Verbindungen mit niedrigeren Überlappungskennzahlen in Fig. 4 als gestrichelte Linien dargestellt.

Neben dem Erscheinen einer neuen Gruppe $C^4_c$ und des Pfads C im Zeitfenster $T^4$ und dem Verschwinden von Gruppe $C^5_a$ bzw dem Enden des Pfads A im Zeitfenster $T^5$ tritt ein weiteres Ereignis zwischen den Zeitfenstern $T^4$ und $T^5$ auf: Gruppe $C^4_b$ teilt sich in die beiden Pfade $B_1'$ und $B_2'$, die jeweils eine der Gruppen $C^5_{b,1}$ $C^5_{b,2}$ enthalten. Anders als bei den Überlappungskennzahlen der zuvor besprochenen Fusionen, bei dem eine der Überlappungskennzahlen den ersten Schwellenwert $\theta$ überschreitet, sind hier beide $overlap(C^4_b, C^5_{b,1}) \approx 0.46 < \theta$ und $overlap(C^4_b, C^5_{b,2}) \approx 0.38 < \theta$.

Das bedeutet, dass keine der beiden Überlappungskennzahlen allein hoch genug wäre, um eine Verbindung herzustellen. Beide Überlappungskennzahlen übersteigen jedoch den ersten Schwellenwert $\theta_{part}$ und werden daher als Kandidaten für eine Teilung behandelt. Außerdem übersteigt die Summe der Überlappungskennzahlen $\theta$. Daher werden beide Verbindungen zu der Menge an Übergängen hinzugefügt. Wiederum wird der Pfad mit der höheren Überlappungskennzahlen, d.h. im gezeigten Ausführungsbeispiel die Verbindung zwischen den Gruppen $C^4{}_b$ und $C^5{}_{b,1}$ bzw Pfaden $B_1'$, $B_2'$ gewählt, wenn die Gruppe, die dem Ereignistyp $\bigcirc$ entspricht, verfolgt wird.

Ein komplexeres Clustering-Modell, das nicht nur die Protokollzeilen eines bestimmten Zeitfensters in die Gruppenkarten seiner direkt benachbarten Zeitfenster einordnet, sondern auch in die nachfolgenden Zeitfenster, ist in der Lage, einen aggregierten Overlap bzw. eine aggregierte Überlappungskennzahl, über mehrere Zeitfenster zu berechnen. Das bedeutet, dass die Überlappung einer bestimmten Gruppe, z.B. $C^1 \in C^1$, über eine andere Gruppe $C^2 \in C^2$ zu einer dritten Gruppe $C^3 \in C^3$ berechnet wird, indem nicht nur die bereits bekannten Referenzen $R^1_{next}$ und $R^2_{prev}$ zwischen $C^1$ und $C^2$ sowie $R^2_{next}$ und $R^3_{prev}$ zwischen $C^2$ und $C^3$ sondern auch die Referenzen zwischen $C^1$ und $C^3$ herangezogen werden. Diese Referenzen werden als $R^1_{next,2}$ und $R^3_{prev,2}$ bezeichnet, wobei der zweite Index die zeitliche Entfernung, gerechnet in Zeitfenstern zwischen den beiden Gruppen bzw Gruppenkarten angibt, d.h., die Gruppenkarte $C^2$ wurde übersprungen. Folgend dieser Terminologie heißen die bereits bekannten Referenzen $R^1_{next,1}$, $R^2_{prev,1}$, zwischen zwei direkt benachbarten Gruppenkarten etc. Analog dazu werden die Referenzen zwischen den Gruppen $C^i$ und $C^{i+m}$, die m Schritte voneinander entfernt sind, $R^i_{next,m}$ und $R^{i+m}_{prev,m}$ genannt. Die Überlappungskennzahl zwischen einer Anzahl von N Gruppen $C^1$, $C^2$, ...., $C^N$ ist dann definiert als

$$overlap(C^1, C^2, ..., C^N) = \frac{\sum_{j=1}^{N-1} \sum_{i=1}^{N-j} \left| \left( R^i_{next,j} \cap R^{i+j}_{curr} \right) \cup \left( R^{i+j}_{prev,j} \cap R^i_{curr} \right) \right|}{\sum_{j=1}^{N-1} \sum_{i=1}^{N-j} \left| R^i_{next,j} \cup R^{i+j}_{curr} \cup R^{i+j}_{prev,j} \cup R^i_{curr} \right|}$$

### Indikatoren und Änderungsmaße

Das "Verfolgen" eines Pfads von Gruppen wird nachfolgend verdeutlicht: Alle Gruppen, die in mindestens drei aufeinander folgenden Zeitfenstern existieren, werden individuell verfolgt. Dabei wird über die ermittelten Pfade hinweg ein Indikator gebildet, dessen Änderung über die Zeit ein Maß für die Änderung der Gruppe des Systemverhaltens des die Protokollzeilen erstellenden Programme oder Rechner darstellt.

Zur Charakterisierung der Änderung einzelner Gruppen können die folgenden Indikatoren herangezogen werden, deren Änderungen jeweils Änderungen der Gruppe indizieren.

Im Folgenden geben $|C^i{}_a|$ die Anzahl der Protokollzeilen an, die jeweils einer Gruppe $C^i{}_a$ und $|C^{i+1}{}_a|$ die Anzahl der Protokollzeilen an, die jeweils einer weiteren Gruppe $C^{i+1}{}_a$ zu einem folgenden Zeitfenster zugeordnet sind. Die folgenden internen Übergänge werden dabei berücksichtigt:

- Gruppengröße bzw. Anzahl an Elementen bzw. Protokollzeilen $s_1$, ..., $s_n$ in einer Gruppe: Von einem Zeitschritt zum anderen wächst eine Gruppe, wenn $|C^{i+1}{}_a| > |C^i{}_a|$, schrumpft die Gruppe, wenn $|C^{i+1}{}_a| < |C^i{}_a|$, und bleibt ansonsten konstant.

- Kompaktheit: Die Standardabweichung $\sigma$ gibt die Streuung der Entfernung von den Gruppen-Elementen zu den Gruppen-Repräsentativen an. Eine Gruppe wird diffuser, wenn $\sigma^{i+1}{}_a > \sigma^i{}_a$, kompakter wenn $\sigma^{i+1}{}_a < \sigma^i{}_a$ und ändert ansonsten seine Kompaktheit nicht.

- Lage: Da Gruppen keine absolute Position haben, sondern nur Entfernungen zwischen ihren Gruppen-Repräsentativen bestimmt werden können, finden Änderungen des Standorts nur relativ zu anderen Gruppen statt.

- Schiefe: Die Schiefe $\gamma$ misst die Asymmetrie der einzelnen Gruppen-Elemente, d.h. die Abweichung von einer gleichmäßigen Verteilung der Gruppen-Elemente innerhalb einer Gruppe. Die Schiefe einer Gruppe steigt, wenn $\gamma^{i+1}{}_a > \gamma^i{}_a$, verringert sich wenn $\gamma^{i+1}{}_a < \gamma^i{}_a$ und bleibt ansonsten konstant.

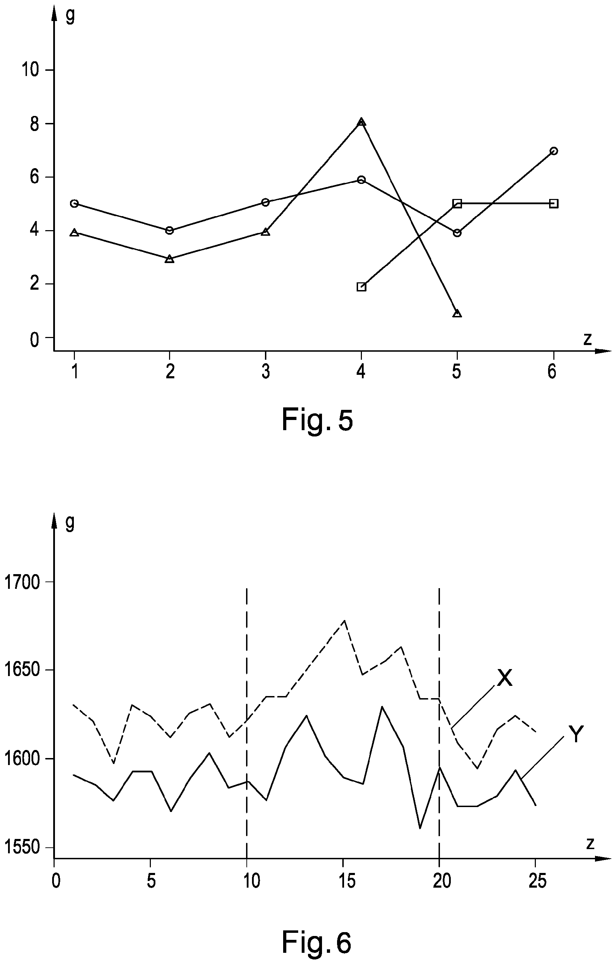

Ihre Gruppengrößen g werden in Zeitschritten z, d.h. nach jedem Zeitfenster, bestimmt. In **Fig. 5** ist die Entwicklung für drei Gruppen, die den oben beschriebenen drei Arten von Ereignissen $\bigcirc$, $\triangle$ und $\square$ zugeordnet sind, sche-

matisch dargestellt. Dabei sind die Zeitschritte z auf der x-Achse und die Gruppengröße g auf der y-Achse aufgetragen. Gruppengrößen von 0 sind in **Fig. 5** nicht dargestellt, da die entsprechenden Gruppen in den jeweiligen Zeitfenstern nicht vorhanden waren.

**Evolutions-Metriken**

Neben den hier beschriebenen Indikatoren ermöglicht die Kenntnis der Abhängigkeiten und evolutionären Beziehungen zwischen den Gruppen aus mehreren, insbesondere mindestens zwei, zeitlich aufeinanderfolgenden Zeitfenstern $T^1$, ... $T^6$, detaillierte Informationen über einzelne Gruppen und Interaktionen zwischen Gruppen abzuleiten und vorteilhaftere Indikatoren zur Ermittlung eines Änderungsmaßes zu bestimmen.

Bestimmte Merkmale, z.B. die Gruppengröße, die der Häufigkeit der Protokollzeilen $s_1$, ... $s_{74}$ innerhalb eines Zeitfensters $T^1$, ... $T^6$ entspricht, sind relevante Metriken für die Erkennung von Anomalien. Solche Metriken weisen jedoch nicht notwendigerweise auf Anomalien bei der Verschiebung von Protokollzeilen $s_1$, ... $s_{74}$ bzw. Elementen von einer Gruppe zu einer anderen hin.

Daher werden zusätzlich Metriken bzw Indikatoren berechnet, die auch die Effekte von Übergängen zwischen Gruppen berücksichtigen, wie dies beispielsweise in M. Toyoda, M. Kitsuregawa, "Extracting Evolution of Web Communities from a Series of Web Archives", Proceedings of the Fourteenth ACM Conference on Hypertext and Hypermedia, pages 28-37, 2003, gezeigt ist. Diese wenden auch Inter-Cluster-Metriken in der Cluster- bzw. Gruppen-Evolutions-Analyse an.

Die folgende Liste zeigt eine Auswahl dieser Metriken, die vorteilhaft für das erfindungsgemäße Modell übernommen werden können. Die Metriken werden für zwei beliebige Gruppen $C^1$ und $C^2$ nur dann berechnet, wenn sie sich innerhalb desselben Pfads befinden, bzw. durch einen der zuvor erwähnten externen Übergänge miteinander verbunden sind. Die Metriken sind relevant, und drücken Eigenschaften für zwei Gruppen aus, die sich innerhalb desselben Pfads befinden:

- Wachstumsrate: Zeigt an, ob die Anzahl der aufgetretenen Protokollzeilen $s_1$, ... $s_n$ durch Subtraktion der Gruppengröße des späteren Zeitfensters $T^1$, $T^2$, $T^3$ von der vorherigen Gruppengröße erhöht oder verringert wurde. Um eine generelle Änderung der Anzahl der Protokollzeilen $s_1$, ... $s_n$ innerhalb eines Zeitfensters $T^1$, $T^2$, $T^3$ auszugleichen, wird die Metrik durch die Gesamtzahl der zugeordneten Protokollzeilen $s_1$, ... $s_n$ dividiert.

$$Growth = \frac{\left| R_{curr}^{i+1} \right| - \left| R_{curr}^{i} \right|}{\left| \bigcup_{\mathcal{C}} R_{curr}^{i} \right|}$$

- Änderungsrate: Anders als bei der Wachstumsrate werden nur die Zuweisungen von Protokollzeilen $s_1$, ... $s_n$ aus einem bestimmten Zeitfenster $T^1$, $T^2$, $T^3$ berücksichtigt, die aber in zwei verschiedene Gruppenkarten $C^1$, $C^2$, $C^3$ gruppiert sind. Diese Kennzahl ist somit ein Maß für die Veränderung der Gruppe in den jeweiligen Gruppenkarten $C^1$, $C^2$, $C^3$. Auch hier wird die Metrik relativ zur Gesamtzahl der Protokollzeilen $s_1$, ... $s_n$ berechnet. Dabei ist zu beachten, dass es auch möglich ist, $R_{curr}^{i+1}$ und $R_{next}^{i}$ analog zu verwenden, um die Metrik basierend auf den Protokollzeilen $s_1$, ... $s_n$ aus der Gruppenkarte $C^2$ in allen folgenden Metriken zu berechnen.

$$Change = \frac{\left| R_{prev}^{i+1} \right| - \left| R_{curr}^{i} \right|}{\left| \bigcup_{\mathcal{C}} R_{curr}^{i} \right|}$$

- Stabilitätsrate: Benutzt Mengen-Operationen, um die Anzahl der Protokollzeilen $s_1$, ..., $s_n$ zu berechnen, die sich in den jeweiligen Mengen geändert haben. In dieser Form ist der Wert im Bereich von [0,1] normalisiert, wobei 0 eine absolut stabile Gruppe anzeigt, d.h., dass alle Protokollzeilen $s_1$, ..., $s_n$, die dieser Gruppe in einem Zeitfenster $T^1$, $T^2$, $T^3$ zugeordnet wurden, auch im anderen Zeitfenster $T^1$, $T^2$, $T^3$ zugeordnet wurden.

$$Stability = \frac{\left|R_{prev}^{i+1}\right| + \left|R_{curr}^{i}\right| - 2 \cdot \left|R_{prev}^{i+1} \cap R_{curr}^{i}\right|}{\left|R_{prev}^{i+1}\right| + \left|R_{curr}^{i}\right|}$$

· Neuheitsrate: Diese Rate misst, ob Protokollzeilen $s_1$, ... $s_n$ eines Zeitfensters $T^1$, $T^2$, $T^3$ der späteren Gruppenkarte $C^1$, $C^2$, $C^3$ zugeordnet wurden, aber nicht der Gruppenkarte $C^1$, $C^2$, $C^3$, zu der sie gehören. Ein möglicher Grund für eine hohe Neuheitsrate ist ein Wechsel der Gruppen-Repräsentativen im späteren Zeitfenster $T^1$, $T^2$, $T^3$. Sie bedeutet aber in der Regel nicht, dass die spätere Gruppenkarte $C^1$, $C^2$, $C^3$ besser zu den Protokollzeilen $s_1$, ..., $s_n$ passt, da nur die hinzugefügten aber nicht die entfernten Protokollzeilen $s_1$, ..., $s_n$ gezählt werden. Entsprechend bedeutet eine Erhöhung der Gruppengröße nicht unbedingt, dass die Neuheitsrate von 0 abweicht. Es ist zu beachten, dass diese Metrik in ein Maß für das Verschwinden von Protokollzeilen $s_1$, ..., $s_n$ aus einer Gruppe transformiert wird, wenn die Terme im Zähler umgedreht werden.

$$Novelty = \frac{\left|R_{prev}^{i+1} \setminus R_{curr}^{i}\right|}{\left|R_{prev}^{i+1}\right|}$$

Bei einer Ausführungsform der Erfindung werden zur einfachen Anomalie-Erkennung die Metriken verwenden, indem sie mit einigen vordefinierten Schwellenwerten verglichen werden und Alarme ausgelöst werden, wenn einer oder mehrere dieser Schwellenwerte überschritten werden. Noch effektiver bilden diese Metriken, vor allem auch die Gruppengröße, Zeitreihen und eignen sich damit für eine zeitreihenbasierte Anomalieerkennung.

Für das in Fig. 4 dargestellte Ausführungsbeispiel wird die relative Wachstumsrate beispielhaft für die Gruppe $C^3_a$ der Protokollzeilen vom Typ $\Delta$ zwischen den Zeitfenstern $T^3$ und $T^4$ nachfolgend berechnet. Wenn *#loglines*³ die Gesamtzahl der Protokollzeilen angibt, die im Zeitfenster $T^3$ auftreten, lautet die Gleichung

$$\begin{aligned} Growth &= \frac{\left|R_{a,curr}^4\right| - \left|R_{a,curr}^3\right|}{\#loglines^3} \\ &= \frac{\left|\{s_{33}, s_{34}, s_{36}, s_{40}, s_{41}, s_{42}, s_{28}, s_{30}\}\right| - \left|\{s_{20}, s_{21}, s_{23}, s_{26}\}\right|}{9} \\ &= \frac{8-4}{9} = \frac{4}{9} \approx 0.44 \end{aligned}$$

Derart wird für die betrachtete Gruppe $C^3_a$ im Zeitfenster $T^4$ eine relative Wachstumsrate von 0,44 bestimmt.

**Zeitreihenanalyse (TSA)**

Modell

Zeitreihen sind Sequenzen von Werten, die bestimmten Zeitpunkten zugeordnet sind. Ein Zeitschritt beschreibt daher den Zustand der internen und externen Übergänge sowie die entsprechenden Metriken jeder Gruppe am Ende eines Zeitfensters $T^1$, $T^2$, $T^3$. Diese Sequenzen werden mit geeigneten Methoden, wie z. B. Autoregressive Integrated Moving Average (ARIMA)-Prozessen, modelliert. ARIMA ist eine gut erforschte und weit verbreitete Modellierungstechnik für TSA, die in der Lage ist, die Auswirkungen von Trends und saisonalen Verhalten in ihren Approximationen einzubeziehen, wie in J. Cryer, K. Chan, "Time Series Analysis: With Applications in R", Springer Texts in Statistics, 2008, beschrieben.

Die Länge der Zeitreihen wird durch die ständige Bearbeitung von Protokollzeilen $s_1$, ..., $s_n$ immer größer und wird irgendwann problematisch, entweder aufgrund von Speichermangel oder einer zu hohen Laufzeit, die für die Anpassung eines ARIMA-Modells erforderlich ist. Als Lösung werden daher nur die letzten P Werte gespeichert und für das Modell verwendet, da ältere Werte von geringerer Relevanz sind.

Vorhersage

Sobald Schätzwerte für die Parameter eines ARIMA-Modells berechnet wurden, kann das Modell in die Zukunft extrapoliert werden. Das entspricht einer Prognose für den Datenpunkt, der unmittelbar auf den letzten bekannten Wert folgt. Durch die rekursive Anwendung dieses Verfahrens ist es vorteilhafterweise möglich, beliebige Horizonte weit in die Zukunft vorauszusagen. Vorzugsweise wird in jedem Zeitschritt z ein ARIMA-Modell erstellt, sodass es ausreicht, nur einen Zeitschritt vorherzusagen.

Die Glätte der Kurve, der eine Zeitreihe folgt, kann sehr unterschiedlich sein. Für die Anomalieerkennung ist daher weder eine Schwelle für die absolute, noch die relative Abweichung zwischen Vorhersage und tatsächlich gemessenem Wert geeignet. Unter der Annahme unabhängiger und normalverteilter Fehler wird daher erfindungsgemäß aus der gemessenen Varianz früherer Werte ein Vorhersageintervall erzeugt, das den zukünftigen Wert mit einer gegebenen Wahrscheinlichkeit enthält. Die Gleichung zur Anomalieerkennung durch dieses Intervall ist weiter unten im Absatz "Anomalieerkennung" angegeben.

Korrelation

Einige Arten von Protokollzeilen $s_1, ..., s_n$ erscheinen häufig in identischen Intervallen, entweder, weil die Prozesse, die sie erzeugen, technisch so miteinander verknüpft sind, sodass einer Protokollzeile $s_1, ..., s_n$ immer eine andere Protokollzeile $s_1, ..., s_n$ folgen muss, oder weil sich die Prozesse, die diese Protokollzeile $s_1, ..., s_n$ erzeugen, in ihren periodischen Zyklen zufällig überlappen.

Unabhängig davon folgen die Zeitreihen von Gruppen denen derartige Protokollzeilen $s_1, ..., s_n$ zugeordnet sind, einem ähnlichen Muster und es wird erwartet, dass sie dieses konsistente Verhalten auch in Zukunft fortsetzen werden. Diese Beziehung wird durch die Cross-Correlation-Function $CCF_k$ geschätzt, die in J. Cryer, K. Chan, "Time Series Analysis: With Applications in R", Springer Texts in Statistics, 2008, beschrieben ist.

Zwischen zwei Zeitreihen $y_t$, $z_t$ und einem beliebigen k wird die Cross-Correlation-Function $CCF_k$ definiert als:

$$
CCF_k = \begin{cases}
\dfrac{\sum_{t=k+1}^{N}(y_t-\bar{y})\cdot(z_{t-k}-\bar{z})}{\sqrt{\sum_{t=1}^{N}(y_t-\bar{y})^2}\sqrt{\sum_{t=1}^{N}(z_t-\bar{z})^2}} & \text{if } k \geq 0 \\[2em]
\dfrac{\sum_{t=1}^{N+k}(y_t-\bar{y})\cdot(z_{t-k}-\bar{z})}{\sqrt{\sum_{t=1}^{N}(y_t-\bar{y})^2}\sqrt{\sum_{t=1}^{N}(z_t-\bar{z})^2}} & \text{if } k < 0
\end{cases}
$$

Die Verwendung der Korrelation als Maß für die Ähnlichkeit ermöglicht es, ähnliche Zeitreihen zu gruppieren. Während die Vorhersage mit Hilfe eines ARIMA-Modells in jedem Zeitschritt z durchgeführt werden muss, ist dies für die Korrelationsanalyse in der Regel vorteilhafterweise nicht erforderlich. Der Grund dafür ist, dass bei der Berechnung der Korrelation zwischen zwei Zeitreihen alle Punkte gleich gewichtet werden und das Hinzufügen eines Datenpunktes zur Serie die Korrelation nur geringfügig verändert.

Es wird erwartet, dass Gruppen, die im normalen Systembetrieb über einen längeren Zeitraum miteinander korrelieren, dies auch in Zukunft tun. Der Fall, dass einige dieser Gruppen die Korrelation dauerhaft stoppen, indiziert, dass ein bestimmtes Ereignis stattgefunden hat, das als Anomalie detektiert werden sollte.

Die gleiche Argumentation kann auf Gruppen angewendet werden, die keine Ähnlichkeit hatten, aber plötzlich eine Korrelation aufweisen. Diese Korrelationsanalyse sollte mehrere Male ausgeführt werden, um zu garantieren, dass die gefundenen Gruppen auch wirklich miteinander korrelieren und es sich nicht nur um ein zufälliges und temporäres Phänomen handelt. Erst dann ist es sinnvoll, Gruppen die aus diesen bekannten Mengen an korrelierenden Gruppen herausfallen oder den Mengen beitreten, als Anomalien zu melden.

Die Korrelation wird im Folgenden anhand der beiden in **Fig. 6** dargestellten Zeitreihen erläutert. In **Fig. 6** sind auf der x-Achse die Zeitschritte z und auf der y-Achse die Gruppengröße g aufgetragen. In **Fig. 6** ist erkennbar, dass die Zeitreihe X mit der Zeitreihe Y in den Zeitschritten 1, ..., 10 korreliert, auch wenn es einen Offset gibt und die Steigungen in den meisten Schritten nicht perfekt übereinstimmen. Der Einfachheit halber wird in diesem Beispiel nur k=0 berücksichtigt. In den ersten 10 Zeitschritten können die jeweiligen Mittelwerte leicht berechnet werden durch

$$
\bar{y} = \frac{1}{N}\sum_{i=1}^{N} y_i
$$

Dies ergibt $\bar{y}$ = 1587.6 für die Zeitreihe Y und $\bar{z}$ = 1620.5 für die Zeitreihe X. Die Korrelation wird dann berechnet durch

$$CCF_0 = \frac{\sum_{t=k+1}^{N}(y_t - \bar{y}) \cdot (z_{t-k} - \bar{z})}{\sqrt{\sum_{t=1}^{N}(y_t - \bar{y})^2}\sqrt{\sum_{t=1}^{N}(z_t - \bar{z})^2}}$$

$$= \frac{(1591 - \bar{y}) \cdot (1630 - \bar{z}) + ... + (1588 - \bar{y}) \cdot (1622 - \bar{z})}{\sqrt{(1591 - \bar{y})^2 + ... + (1588 - \bar{y})^2}\sqrt{(1630 - \bar{z})^2 + ... + (1622 - \bar{z})^2}}$$

$$= \frac{3.4 \cdot 9.5 + ... + 0.4 \cdot 1.5}{\sqrt{3.4^2 + ... + 0.4^2}\sqrt{9.5^2 + ... + 1.5^2}}$$

$$= \frac{691}{\sqrt{744.4}\sqrt{976.5}} \approx 0.81$$

Die Korrelation wird in der Regel mit einem vordefinierten Schwellwert verglichen, der bestimmt, ob zwei Zeitreihen miteinander korrelieren oder nicht. Unter der Annahme, dass dieser Schwellenwert 0,8 beträgt, werden die beiden Gruppen, die den Zeitreihen Y und X entsprechen, als zusammengehörig markiert.

Die Korrelation zwischen den Zeitschritten $z_{11}$, ..., $z_{20}$ wird analog berechnet. Dabei müssen auch die Mittelwerte der beiden Zeitreihen X, Y neu berechnet werden. Die Visualisierung deutet bereits darauf hin, dass es in diesem Intervall weniger Korrelation gibt, und dementsprechend liegt die berechnete Korrelation nur bei etwa 0,34. Dieser Wert liegt unter dem vordefinierten Schwellwert, so dass keine Korrelation festgestellt werden kann. Dies steht im Widerspruch zu den zuvor gewonnenen Erkenntnissen über die Korrelation der Zeitreihen Y und X und wird daher als Anomalie gemeldet.

Optional können bei einem erfindungsgemäßen Verfahren in praktischen Anwendungen Korrelationen über mehrere Zeitfenster verwendet werden, um sicherzustellen, dass es sich tatsächlich um dauerhaft korrelierende Zeitreihen handelt, was in gezeigten Ausführungsbeispiel aus Gründen der Einfachheit vernachlässigt wurde.

Anomalieerkennung

Der Algorithmus zur Erkennung von Anomalien prüft für jede sich entwickelnde Gruppe, ob der tatsächlich abgerufene Wert innerhalb der prognostizierten Vorhersageintervallgrenzen liegt. Die Berechnung dieses Intervalls basiert auf der ARIMA-Schätzung $\hat{y}_t$ und einer Fehlerschätzung e. Mit Hilfe der Standardnormalverteilung Z wird eine Anomalie mit dem Konfidenzniveau (1-$\alpha$) erkannt, wenn der Istwert y außerhalb des Vorhersageintervalls liegt, d.h.

$$y_t \notin \left[ \hat{y}_t - \mathcal{Z}_{1-\frac{\alpha}{2}}\sqrt{Var(e)}, \hat{y}_t + \mathcal{Z}_{1-\frac{\alpha}{2}}\sqrt{Var(e)} \right]$$

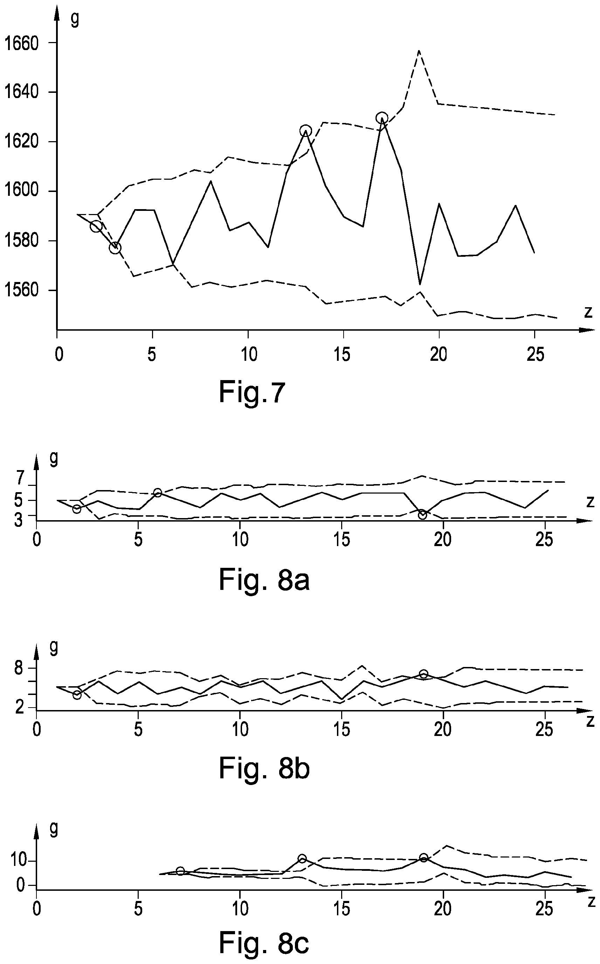

Die Anwendung dieser Formel wird anhand des in **Fig. 7** gezeigten Ausführungsbeispiels verdeutlicht. Dabei wird eine Gruppengröße g betrachtet, die über mehrere Zeitschritte z gemessen wurde. **Fig. 7** zeigt die tatsächliche Gruppengröße g als durchgezogene Linie und die berechneten Vorhersagegrenzen als unterbrochene Linien. Erkannte Anomalien sind als Kreise gekennzeichnet.

Zunächst wird die Berechnung des Vorhersageintervalls durchgeführt. Beispielsweise werden die Prognosegrenzen für den Zeitschritt $z_{17}$, d.h. die Gruppengrößen g aus den Zeitschritten $z_1$,..., $z_{16}$ werden bei der Prognose berücksichtigt. Ein ARIMA-Modell wird entweder nach dem AIC-, AICc- oder BIC-Wert angepasst. Dies geschieht mit dem R-Befehl "auto.arima" aus dem Paket "forecast".

Abhängig von den analysierten Daten können vorteilhafterweise bestimmte Parameter wie z.B. die Saisonalität angepasst werden, um ein periodisches Verhalten zu berücksichtigen. Der Einfachheit halber werden im gezeigten Ausführungsbeispiel keine derartigen Anpassungen vorgenommen, da die Kurve keine Periode aufweist. Die am besten passenden Parameter, die von der Funktion gefunden werden, sind AR=0, I=0, MA=0 und ein Mittelwert von 1591.375. In dieser einfachen Einstellung gibt es daher keine autoregressiven (AR), integrierten (I) oder moving-average (MA) Anteile die berücksichtigt werden müssen, und die Vorhersage besteht nur aus dem Mittelwert. Weiters können wir die Varianz der Zeitreihe mit "var" berechnen, diese ist 169.7167. Der AIC für diese Einstellung ist 130.52.

Im nächsten Schritt wird das ARIMA-Modell verwendet, um die Grenzen der zukünftigen Gruppengröße g mit einem vordefinierten Vorhersage-Level von 0,99, d.h. $\alpha$ = 0,01, vorherzusagen. Der Befehl "forecast" gibt nicht nur die Vorhersage für die Gruppengröße g zurück, sondern auch die untere und obere Grenze, die der Vorhersageebene entsprechen. In unserem Fall ist die untere Vorhersagegrenze 1557,818 und die obere Grenze 1624,932. Da $\hat{y}_t$ die Vorhersage (der Mittelwert) und Z die StandardNormalverteilung ist, muss eine nicht-anomale gemessene Gruppengröße

g innerhalb $y_t$ dieses Bereichs liegen:

$$y_{17} \in \left[ \hat{y}_{17} - \mathcal{Z}_{1-\frac{\alpha}{2}} \sqrt{Var(e)}, \hat{y}_{17} + \mathcal{Z}_{1-\frac{\alpha}{2}} \sqrt{Var(e)} \right] \qquad (1)$$

$$y_{17} \in \left[ 1591.375 - \mathcal{Z}_{1-\frac{0.01}{2}} \sqrt{169.7167}, 1591.375 + \mathcal{Z}_{1-\frac{0.01}{2}} \sqrt{169.7167} \right]$$

$$y_{17} \in \left[ 1591.375 - \mathcal{Z}_{0.995} \sqrt{169.7167}, 1591.375 + \mathcal{Z}_{0.995} \sqrt{169.7167} \right]$$

$$y_{17} \in \left[ 1591.375 - 2.575829304 \cdot 13.02753, 1591.375 + 2.575829304 \cdot 13.02753 \right]$$

$$y_{17} \in \left[ 1557.818, 1624.932 \right]$$

Die gemessene Gruppengröße g im Zeitschritt $z_{17}$ erweist sich jedoch als g = 1629 und überschreitet damit die obere Grenze, so dass eine Anomalie entsteht. Die Betrachtung längerer Zeitreihen führt zu exakteren Schätzungen für die Modellparameter. Analoge Berechnungen werden für jeden Punkt der Zeitreihe durchgeführt, was zu dem schlauchartigen Intervall führt, der dem Verhalten der Gruppengröße g folgt.

Die auf ARIMA und Korrelation basierenden Detektionen werden für ausgewählte, insbesondere jede einzelne, Gruppe durchgeführt, die als stabil gilt, d.h. für eine bestimmte Mindestanzahl von Zeitschritten z existiert. Dies stellt sicher, dass das ARIMA-Modell genügend Werte berücksichtigt, um eine exakte Vorhersage treffen zu können.

Wie in **Fig. 7** zu sehen ist, zeigen die Prognosegrenzen in den ersten Zeitschritten z die tatsächliche Varianz der Zeitreihe nicht angemessen an, da nicht ausreichend Daten vorhanden sind. Erst nach etwa fünf Zeitschritten z hat das Modell ausreichend viele historische Werte zur Verfügung, um ein zuverlässiges Vorhersageintervall zu erzeugen. Je mehr Werte vorhanden sind, umso besser wird das Vorhersageintervall dem Signal angepasst. Dies gilt insbesondere für periodische Signale, bei denen mindestens eine Periode an Datenpunkten zur Verfügung stehen muss, um die Effekte der Periode korrekt vorhersagen zu können. An dieser Stelle sei außerdem darauf hingewiesen, dass Anomalien in der Regel die Varianz erhöhen und in den folgenden Zeitschritten daher weitere auftretende Anomalien womöglich übersehen werden.

Eine große Anzahl von Gruppen, Zeitschritten z und die statistische Wahrscheinlichkeit zufälliger Schwankungen verursachen regelmäßig Fehlalarme und erschweren es häufig, auf alle erkannten Anomalien zu reagieren. Erfindungsgemäß werden daher die für jede Gruppen-Entwicklung identifizierten Anomalien zu einer einzigen Funktion zusammengefasst. Zuerst werden anomale Punkte unterhalb des Vorhersageintervalls durch

$$s = \begin{cases} y_t & \text{if } y_t > \hat{y}_t + \mathcal{Z}_{1-\frac{\alpha}{2}} \sqrt{Var(e)} \\ 2\hat{y}_t - y_t & \text{if } y_t < \hat{y}_t - \mathcal{Z}_{1-\frac{\alpha}{2}} \sqrt{Var(e)} \end{cases}$$

auf die Seite oberhalb des Vorhersageintervalls gespiegelt und mit der Zeit $\tau_{C_t}$, die die Anzahl der Zeitschritte beschreibt, in denen eine Gruppe $C^1_a$, $C^1_b$, $C^1_c$, $C^2_a$, $C^2_b$, $C^2_c$, $C^3_a$, $C^3_b$, $C^3_c$ bereits existiert und $C_{A,t}$, der Menge der Gruppen, die Anomalien im Zeitschritt t enthalten, definieren wir dann den Anomalie-Score $a_t$ für jeden Zeitpunkt durch

$$a_t = 1 - \frac{\sum_{C_t \in \mathcal{C}_{A,t}} \left( \left( \hat{y}_{C_t} + \mathcal{Z}_{1-\frac{\alpha}{2}} \sqrt{Var(e)} \right) \cdot log\left( \tau_{C_t} \right) \right)}{|\mathcal{C}_{A,t}| \sum_{C_t \in \mathcal{C}_{A,t}} \left( y_{C_t} \cdot log\left( \tau_{C_t} \right) \right)}$$

Die obere Prognosegrenze im Zähler und der tatsächliche Wert im Nenner stellen sicher, dass $a_t \in [0,1]$, wobei 0 bedeutet, dass keine Anomalie auftrat und Werte nahe 1 bedeuten, dass eine starke Anomalie entdeckt wurde. Durch Division durch $|C_{A,t}|$ und Einbeziehung der Gruppen-Existenzzeit $\tau_{C_t}$ wird sichergestellt, dass Anomalien höher gewichtet werden, wenn sie in mehreren oder länger existierenden Gruppen entdeckt wurden.

**Fig. 8a bis Fig. 8c** veranschaulichen die Berechnung dieser Metrik, wobei drei Zeitreihen dreier Pfade A, B, C dargestellt sind, die die relevanten Eigenschaften dieser Detektionstechnik hervorheben. **Fig. 8a bis Fig. 8c** zeigen jeweils eine der drei Zeitreihen der Pfade A, B, C, einschließlich der Anomalien, die in jeder sich entwickelnden Gruppe entdeckt wurden. Die erste Anomalie, die in den zweiten Schritten jeder Gruppen-Entwicklung auftritt, wird im Folgenden ignoriert, da sie durch die bereits erwähnten Probleme verursacht wird (nicht ausreichend vergangene Werte vorhanden). Erfindungsgemäß werden die die folgenden Arten von Anomalien unterschieden:

- Einzelne Gruppe, geringe Ausprägung: Pfad A gibt es eine Anomalie, die nur knapp über der oberen Grenze in Zeitschritt 6 liegt. Diese Art der Anomalie sollte gering gewichtet werden (**Fig. 8a**).
- Einzelne Gruppe, große Ausprägung: In Pfad C gibt es eine Anomalie, die weit über der oberen Grenze in Zeitschritt 13 liegt. Eine Anomalie soll höher gewichtet werden, wenn sie weit über der Obergrenze oder weit unter der Untergrenze liegt (**Fig. 8c**).
- Mehrere Gruppen, geringe Ausprägung: Es gibt eine Anomalie im Zeitschritt 19, die von allen Gruppen erkannt wird. Eine Anomalie soll höher gewichtet werden, wenn sie in mehreren Gruppen erkannt wird.
- Mehrere Gruppen, große Ausprägung: Dieser Fall wird in dem einfachen Beispiel weggelassen. Als Kombination der beiden vorhergehenden Fälle wird diese Anomalie klarerweise am höchsten gewertet.

Darüber wird die Zeit, seit der eine Gruppe bereits besteht, bei der Gewichtung von Anomalien berücksichtigt. Die Prognosegrenzen einer Gruppe sind vertrauenswürdiger, wenn die zugehörige Gruppe bereits über einen längeren Zeitraum besteht. Dies betrifft den Pfad C (**Fig. 8c**), der erst beim Zeitschritt 6 entsteht und deshalb geringer gewichtet wird.

Der Anomalie-Score wird auf 0 gesetzt, wenn in einem bestimmten Zeitschritt keine Anomalien auftreten. Zuerst wird Zeitschritt 6 betrachtet. Nur Pfad A (**Fig. 8a**) enthält zu diesem Zeitpunkt eine Anomalie. Die Obergrenze, die zu diesem Zeitpunkt im Zeitschritt 5 berechnet wird ist 5,81, die tatsächliche Gruppengröße g ist jedoch sechs (6). Außerdem existiert die Gruppe seit sechs Zeitschritten z. Daher wird der Anomalie-Score As wie folgt berechnet

$$a_6 = 1 - \frac{5.81 \cdot log(6)}{1 \cdot 6 \cdot log(6)} = 1 - 0.97 = 0.03$$

Wie erwartet, ist dies eine relativ niedrige Wertung. Nun wird Zeitschritt 13 betrachtet. Auch hier gibt es nur eine Gruppe, die eine Anomalie aufweist. Die Obergrenze liegt in diesem Fall bei 6,49 und die tatsächliche Gruppengröße bei 12. Außerdem ist die Gruppe vor 8 Zeitschritten entstanden. Die Berechnung der Anomalie-Score As lautet daher wie folgt:

$$a_{13} = 1 - \frac{6.49 \cdot log(8)}{1 \cdot 12 \cdot log(8)} = 1 - 0.54 = 0.46$$

Dies ist bereits ein größerer Anomalie-Score, der anzeigt, dass sich das Systemverhalten zu diesem Zeitpunkt stark geändert hat. Abschließend wird der Zeitschritt 19 untersucht. Hier beträgt die Größe des Pfads A (**Fig. 8a**) drei und unterschreitet damit die untere Vorhersagegrenze von 3,81, d.h. der Punkt muss auf der Oberseite nach der vorhin angegebenen Gleichung gespiegelt werden.

Mit dem vorhergesagten Wert $\hat{y}$ = 6 ist der neue Punkt $s$ = 2 · 6 - 3 = 9. Die obere Vorhersagegrenze beträgt 8,19 und somit ist der Abstand zur nächstgelegenen Vorhersagegrenze gleich geblieben, d.h. |3 - 3.81| = |9 - 8.19| = 0.81. Die oberen Prognosegrenzen der Pfade B und C sind 6,30 bzw. 11,80 im Gegensatz zu ihren tatsächlichen Größen, 7 und 12. Während die Gruppen A und B (**Fig. 8a, Fig. 8b**) seit 19 Zeitschritten existieren, existiert Pfad C (**Fig. 8c**) erst seit 14 Zeitschritten. Das führt zum Anomalie-Score As

$$a_{19} = 1 - \frac{8.19 \cdot log(19) + 6.30 \cdot log(19) + 11.80 \cdot log(14)}{3 \cdot (9 \cdot log(19) + 7 \cdot log(19) + 12 \cdot log(14))}$$

$$= 1 - \frac{73.81}{3 \cdot 78.78} = 1 - 0.31 = 0.69$$

Aufgrund der Tatsache, dass die Anomalie in drei verschiedenen Gruppen aufgezeichnet wurde, ist der Anomalie-Score As höher als der Anomalie-Score As, der im Zeitschritt 13 berechnet wurde. Die Anomaliewerte werden wiederum in einer einzigen Kurve dargestellt, die in **Fig. 9** gezeigt ist.

Im vorangehenden Ausführungsbeispiel wurden im Zuordnungs- bzw Allokationsschritt lediglich Zuordnungen zwischen Protokollzeilen bzw Gruppen von zwei benachbarten Zeitfenstern vorgenommen. Grundsätzlich ist es auch möglich, durch Finden von Zuordnungen der Protokollzeilen $s_1$, ..., $s_n$ eines Zeitfensters $T^1$, $T^2$, $T^3$ in eine Mehrzahl von

benachbarten Gruppenkarten $C^1$, $C^2$, $C^3$ eine Zuordnung über mehrere Zeitfenster $T^1$, $T^2$, $T^3$ hinweg herzustellen. Somit wird die Bestimmung von Übergängen (Transitions) zwischen Gruppen, die verschiedenen Zeitfenstern $T^1$, $T^2$, $T^3$, zugeordnet sind, ermöglicht. Ein derartiger Übergang zwischen Gruppen ist beispielsweise dann gegeben, wenn sich eine Gruppe aus einem Zeitfenster $T^1$, $T^2$, $T^3$ zu einer Gruppe aus einem zeitlich, insbesondere unmittelbar, nachfolgenden Zeitfenster $T^1$, $T^2$, $T^3$ entwickelt, da sie einen hohen Anteil an gemeinsamen Protokollzeilen $s_1$, ..., $s_n$ teilen. Eine differenziertere Fallanalyse kann auch komplexe Übergängen, wie Teilungen oder Fusionen von Gruppe beinhalten.

**Patentansprüche**

1.  Verfahren zur Erkennung von anormalen Betriebszuständen in einem Computernetzwerk (1), welches mehrere Computer (1a, 1b, 1c) umfasst, wobei

    - von den Computern (1a, 1b, 1c) des Computernetzwerks (1) oder von auf diesen Computern (1a, 1b, 1c) ablaufenden Prozessen (2a, 2b, 2c) jeweils Protokolle erstellt werden,
    - von den Computern (1a, 1b, 1c) oder den Prozessen (2a, 2b, 2c) bei Auftreten vorgegebener Ereignisse für jedes dieser Ereignisse jeweils ein Protokolldatensatz in Form einer Protokollzeile ($s_1$, ..., $s_n$) erstellt wird und wobei jede Protokollzeile ($s_1$, ..., $s_n$) einen Beschreibungsdatensatz (32a, 32b, 32c) für das jeweilige protokollierte Ereignis umfasst, wobei

        a) Zeitfenster ($T^1$, $T^2$, $T^3$) vorgegeben werden,
        b) die Protokollzeilen ($s_1$, ..., $s_n$) entsprechend dem Zeitpunkt ihrer Erstellung oder Verarbeitung jeweils einem vorgegebenen Zeitfenster ($T^1$, $T^2$, $T^3$) zugeordnet werden,
        c) diejenigen Protokollzeilen ($s_1$, ..., $s_n$), die einem jeweils betrachteten Zeitfenster ($T^1$, $T^2$, $T^3$) zugeordnet sind, hinsichtlich ihrer Ähnlichkeit analysiert werden und aufgrund ihrer Ähnlichkeit nach einer vorgegebenen Metrik und unter Vorgabe eines Ähnlichkeits-Schwellenwerts zu einzelnen Gruppen ($C^1_a$, $C^1_b$, $C^1_c$, $C^2_a$, $C^2_b$, $C^2_c$, $C^3_a$, $C^3_b$, $C^3_c$) zusammengefasst werden,
        d) Protokollzeilen ($s_1$, ..., $s_n$) eines jeweils betrachteten Zeitfensters ($T^1$, $T^2$, $T^3$) zu Gruppen die jeweils benachbarten Zeitfenstern ($T^1$, $T^2$, $T^3$) zugeordnet sind, unter Verwendung der in Schritt c) verwendeten Metrik zugeordnet werden,
        e) eine Überlappungskennzahl gebildet wird, die aufgrund der in Schritt d) vorgenommenen Zuordnungen ein Maß für den Grad an Übereinstimmung zwischen den Protokollzeilen zweier oder mehrerer Gruppen in unterschiedlichen Zeitfenstern angibt,
        f) unter Auswertung der gebildeten Überlappungskennzahl Gruppen aus zeitlich benachbarten Zeitfenstern ($T^1$, $T^2$, $T^3$) einander zugeordnet werden, durch

            - Finden von Gruppen deren Überlappungskennzahl einen vorgegebenen ersten Schwellenwert ($\theta$) überschreitet und/oder
            - Finden einer Anzahl von Nachfolger-Gruppen in einem nachfolgenden Zeitfenster für eine Vorgänger-Gruppe, wobei die Überlappungskennzahl zwischen jeder der Nachfolger-Gruppen mit der Vorgänger-Gruppe einen vorgegebenen zweiten Schwellenwert ($\theta_{part}$) überschreitet und die Summe der den vorgegebenen zweiten Schwellenwert ($\theta_{part}$) überschreitenden Überlappungskennzahlen einen vorgegebenen ersten Schwellenwert ($\theta$) überschreitet, und/oder
            - Finden einer Anzahl von Vorgänger-Gruppen in einem vorangehenden Zeitfenster ($T^1$, $T^2$, $T^3$) für eine Nachfolger-Gruppe, wobei die Überlappungskennzahl zwischen jeder der Vorgänger-Gruppen mit der Nachfolger-Gruppe einen vorgegebenen zweiten Schwellenwert ($\theta_{part}$) überschreitet und die Summe der den vorgegebenen zweiten Schwellenwert ($\theta_{part}$) überschreitenden Überlappungskennzahlen einen vorgegebenen ersten Schwellenwert ($\theta$) überschreitet, und/oder
            - Finden von Gruppen denen keine Vorgänger-Gruppe oder Nachfolger-Gruppe zuordenbar ist, und

        g) ein Graph umfassend eine Anzahl von gerichteten Pfaden erstellt wird, die als Knoten Gruppen und als Kanten Zuordnungen umfassen und die den Verlauf einander zugeordneten Gruppen über eine vorgegebene Anzahl von zeitlich vorangehenden Zeitfenstern beschreiben, wobei die einzelnen Pfade den Verlauf einander zugeordneter Gruppen in zeitlich aufeinanderfolgenden Zeitfenstern im Graphen angeben, und
        h) wobei für die einzelnen Pfade jeweils ein zeitlicher Verlauf eines Indikators für die jeweilige Gruppe über eine vorgegebene Anzahl von Zeitfenstern gebildet wird,
        wobei als Indikator eines der folgenden Indikatormaße herangezogen wird:

- die Größe der jeweiligen Gruppe,
- ein Maß für die mittlere Ähnlichkeit der einzelnen Protokollzeilen in der jeweiligen Gruppe,
- ein Maß für den Abstand der Protokollzeilen der Gruppe zu den Protokollzeilen anderer Gruppen,
- ein Indikator, der für die Zunahme und/oder Abnahme der Größe der jeweiligen Gruppe über den jeweiligen Pfad charakteristisch ist,
- ein Indikator, der für die Anzahl von Protokollzeilen charakteristisch ist, für die in den jeweils einander zugeordneten Gruppen keine ähnlichen Gruppen vorliegen, und

i) die Verläufe der Indikatoren über die einzelnen Pfade für die Bestimmung herangezogen werden, ob ein anomaler Zustand vorliegt.

2. Verfahren nach Anspruch 1, **dadurch gekennzeichnet, dass** die Länge der Zeitfenster

- adaptiv an die Frequenz des Auftretens der vorgegebenen Ereignisse für die jeweils eine Protokollzeile ($s_1, ..., s_n$) erstellt wird, angepasst wird, oder
- regelbasiert entsprechend einer vorgegebenen Metrik, die einen Indikator für die Anzahl an erwarteten Ereignissen im Computernetzwerk (1) liefert, verändert wird, insbesondere entsprechend der Tageszeit und/oder dem Wochentag und/oder der Auslastung des Computernetzwerks (1) und/oder der Anzahl angemeldeter Benutzer angepasst wird.

3. Verfahren nach einem der Ansprüche 1 oder 2, **dadurch gekennzeichnet, dass** zur Zuordnung der einzelnen Protokollzeilen zu den Zeitfenstern in Schritt b)

- während des Betriebs hintereinander einzelne Zeitfenster ($T^1$, $T^2$, $T^3$) festgelegt werden, wobei zu jedem Zeitpunkt jeweils eines der Zeitfenster aktuell ist und die Protokollzeilen unmittelbar nach ihrer Erstellung jeweils dem aktuellen Zeitfenster zugewiesen werden, und/oder
- die Protokollzeilen mit einem Zeitstempel ihrer Erstellung oder des ihnen zugeordneten Ereignisses versehen werden, wobei die Protokollzeilen dem jeweiligen Zeitfenster aufgrund des ihnen zugewiesenen Zeitstempels zugewiesen werden.

4. Verfahren nach einem der vorangehenden Ansprüche, **dadurch gekennzeichnet, dass** in Schritt d) Protokollzeilen ($s_1, ..., s_n$) eines jeweils betrachteten Zeitfensters ($T^1$, $T^2$, $T^3$) zu Gruppen zugeordnet werden, die einem jeweils zeitlich, vorzugsweise unmittelbar, vorangehenden oder nachfolgenden Zeitfenster ($T^1$, $T^2$, $T^3$), zugeordnet sind,

5. Verfahren nach einem der vorangehenden Ansprüche, **dadurch gekennzeichnet, dass** in Schritt e)

- die Überlappungskennzahl angibt, wie viele einer Gruppe zugeordneten Protokollzeilen ($s_1, ..., s_n$) einer oder mehreren anderen Gruppen aus zeitlich benachbarten, insbesondere unmittelbar aufeinander folgenden, Zeitfenstern ($T^1$, $T^2$, $T^3$) in Schritt d) zugeordnet werden konnten, und/oder
- die Überlappungskennzahl für zwei Gruppen in unterschiedlichen Zeitfenstern als das Verhältnis der gegenseitigen Zuordnungen von Protokollzeilen einer Gruppe zur jeweils anderen Gruppe zu den insgesamt bestehenden Zuordnungen von Protokollzeilen dieser Gruppen angegeben wird, und/oder
- die Überlappungskennzahl für mehrere ausgewählte Gruppen in jeweils unterschiedlichen Zeitfenstern als das Verhältnis zwischen

i) den gegenseitigen Zuordnungen von Protokollzeilen einer der ausgewählten Gruppen zu einer jeweils anderen ausgewählten Gruppe und
ii) den insgesamt bestehenden Zuordnungen von Protokollzeilen dieser ausgewählten Gruppen angegeben wird.

6. Verfahren nach einem der vorangehenden Ansprüche, **dadurch gekennzeichnet, dass** in Schritt f) für den Fall, dass für eine Gruppe mehrere Vorgänger-Gruppen zur Verfügung stehen und mehrere Pfade zu einem vereinigt werden, für den weiteren Verlauf des Pfads derjenige Pfad als Vorgänger-Pfad herangezogen und fortgesetzt wird,

- dessen Gruppen, insbesondere dessen letzte Gruppe, mit der gemeinsamen nachfolgenden Gruppe den größten Überlappungskoeffizienten aufweist,
- dessen Gruppen, insbesondere dessen letzte Gruppe, die meisten Protokollzeilen aufweist,
- der unter den in Frage kommenden Vorgänger-Pfaden am längsten ist und/oder am weitesten in die Vergangenheit reicht.

**7.** Verfahren nach einem der vorangehenden Ansprüche, **dadurch gekennzeichnet, dass** in Schritt f) für den Fall, dass für eine Gruppe mehrere Nachfolger-Gruppen gefunden wurden und ein Pfad in mehrere Pfade aufgeteilt wird, derjenige Pfad als Nachfolger-Pfad herangezogen wird und/oder der Pfad mit demjenigen Nachfolger-Pfad fortgesetzt wird,

  i) dessen Gruppen, insbesondere dessen erste Gruppe, mit der gemeinsamen Gruppe den größten Überlappungskoeffizienten aufweist,
  ii) dessen Gruppen, insbesondere dessen erste Gruppe, die meisten Protokollzeilen aufweist,
  iii) der unter den in Frage kommenden Vorgänger-Pfaden am längsten ist und/oder am weitesten in die Vergangenheit reicht.

**8.** Verfahren nach einem der vorangehenden Ansprüche, **dadurch gekennzeichnet, dass** als Indikator in Schritt h) die Anzahl der Protokollzeilen einer Gruppe, für die in der jeweils nachfolgenden oder vorangehenden Gruppe keine Entsprechungen vorhanden sind als Indikatormaß herangezogen wird.

**9.** Verfahren nach einem der vorangehenden Ansprüche, **dadurch gekennzeichnet, dass** ausgehend von den in Schritt h) ermittelten Verläufen von Indikatoren oder der zeitfensterweise gebildeten Summe von ausgewählten Indikatoren in Schritt i)

  - eine Zeitreihenvorhersage gebildet wird und ein Vorhersageintervall für den wahrscheinlichen Verlauf des Änderungsmaßes nach dem zeitlich spätesten Zeitfenster ermittelt wird, und
  - der weitere zeitliche Verlauf des Indikators oder der zeitfensterweise gebildeten Summe von ausgewählten Indikatoren nach dem jeweiligen Zeitfenster daraufhin untersucht wird, ob er der Vorhersage entspricht und/oder im ermittelten Vorhersageintervall liegt, und falls dies nicht der Fall ist, ein anomaler Zustand im Computernetzwerk (1) festgestellt wird.

**10.** Verfahren nach Anspruch 9, **dadurch gekennzeichnet, dass** die Zeitreihen-Vorhersage mittels eines Autoregressive Integrated Moving Average-Modells ermittelt wird.

**11.** Verfahren nach einem der vorangehenden Ansprüche, **dadurch gekennzeichnet, dass** zwischen den einzelnen Verläufen von Indikatoren nach Korrelationen gesucht wird und für den Fall, dass neue Korrelationen auftreten oder, dass zuvor bestehende Korrelationen nicht mehr bestehen, ein anormaler Zustand im Computernetzwerk (1) festgestellt wird.

**12.** Verfahren nach einem der vorangehenden Ansprüche, **dadurch gekennzeichnet, dass** in Schritt a) Zeitfenster ($T^1$, $T^2$, $T^3$) vorgegeben werden, die nahtlos aneinander grenzen und vorzugsweise gleich lang sind.

**13.** Verfahren nach einem der vorangehenden Ansprüche, **dadurch gekennzeichnet, dass** in Schritt c) jede Protokollzeile ($s_1$; ..., $s_n$) jeweils nur einer Gruppe zugeordnet wird.

**14.** Verfahren nach einem der vorangehenden Ansprüche, **dadurch gekennzeichnet, dass** in Schritt d) die Protokollzeilen ($s_1$, ..., $s_n$) eines jeweils betrachteten Zeitfensters ($T^1$, $T^2$, $T^3$) zu Gruppen, die jeweils benachbarten Zeitfenstern ($T^1$, $T^2$, $T^3$) zugeordnet sind, unter Verwendung des in Schritt c) verwendeten Ähnlichkeits-Schwellenwerts zugeordnet werden,

**15.** Datenträger, auf dem ein Computerprogramm zur Durchführung eines Verfahrens nach einem der vorangehenden Ansprüche abgespeichert ist.

## Claims

**1.** Method for recognising abnormal operational states in a computer network (1), which comprises a plurality of computers (1a, 1b, 1c), wherein

  - logs are created respectively by the computers (1a, 1b, 1c) in the computer network (1) or by the processes (2a, 2b, 2c) running on these computers (1a, 1b, 1c),

- a log record in the form of a log line ($s_1$, ..., $s_n$) is created respectively by the computers (1a, 1b, 1c) or the processes (2a, 2b, 2c) when specified events occur, for each of these events, and wherein each log line ($s_1$, ..., $s_n$) comprises a description record (32a, 32b, 32c) for the particular logged event, wherein

a) timeframes ($T^1$, $T^2$, $T^3$) are specified,
b) the log lines ($s_1$, ..., $s_n$) are each assigned to a specified timeframe ($T^1$, $T^2$, $T^3$) corresponding to their time of creation or processing,
c) the similarity of those log lines ($s_1$, ..., $s_n$), which are assigned to one of the timeframes ($T^1$, $T^2$, $T^3$) in question, is analysed and they are combined in individual groups ($C^1_a$ $C^1_b$, $C^1_c$, $C^2_a$, $C^2_b$, $C^2_c$, $C^3_a$, $C^3_b$, $C^3_c$) on the basis of their similarity in accordance with a specified metric and a certain similarity threshold,
d) log lines ($s_1$, ..., $s_n$) for one of the timeframes ($T^1$, $T^2$, $T^3$) in question are assigned to groups of adjacent timeframes ($T^1$, $T^2$, $T^3$), using the metric applied in step c),
e) an overlap ratio is produced, which establishes a measurement of the degree of correspondence between the log lines for two or more groups in different timeframes on the basis of the assignment performed in step d),
f) by evaluating the overlap ratio produced, groups of chronologically adjacent timeframes ($T^1$, $T^2$, $T^3$) are correlated with each other, by

- identifying groups where the overlap ratio exceeds a specified first threshold value ($\theta$) and/or
- identifying a number of successor groups in a subsequent timeframe for a predecessor group, wherein the overlap ratio between each of the successor groups and the predecessor group exceeds a specified second threshold value ($\theta_{part}$) and the sum of the overlap ratios exceeding the specified second threshold value ($\theta_{part}$) exceeds a specified first threshold value ($\theta$), and/or
- identifying a number of predecessor groups in a preceding timeframe ($T^1$, $T^2$, $T^3$) for a successor group, wherein the overlap ratio between each of the predecessor groups and the successor group exceeds a specified second threshold value ($\theta_{part}$) and the sum of the overlap ratios exceeding the specified second threshold value ($\theta_{part}$) exceeds a specified first threshold value ($\theta$), and/or
- identifying groups not assignable to a predecessor group or successor group, and

g) a graph comprising a number of directed paths is produced, which comprises groups as nodes and assignments as edges and which describes the sequence of groups correlated with each other over a specified number of chronologically preceding timeframes, wherein the individual paths indicate the sequence of groups correlated with each other in chronologically successive timeframes in the graph, and
h) wherein, for the individual paths, a chronological sequence of an indicator for the particular group is created over a specified number of timeframes, wherein one of the following indicator measurements is used as the indicator:

- the size of the particular group,
- a measurement of the average similarity of the individual log lines in the particular group,
- a measurement of the distance of the log lines in the group to the log lines in other groups,
- an indicator, which is characteristic of the increase and/or decrease in the size of the particular group over the particular path,
- an indicator, which is characteristic of the number of log lines, for which there are no similar groups in the groups correlated with each other, and

i) the sequences of the indicators over the individual paths used to determine whether there is an abnormal state.

2. Method according to claim 1, **characterised in that** the length of the timeframe

- is adaptively adjusted to the frequency of occurrence of the specified events for which a particular log line ($s_1$, ..., $s_n$) is created, or
- is subject to rules-based changes in accordance with a specific metric, which provides an indicator of the number of anticipated events in the computer network (1), in particular adapted according to the time of day and/or the day of the week and/or the load on the computer network (1) and/or the number of users logged in.

3. Method according to any of claims 1 or 2, **characterised in that**, in order to assign the individual log lines to the timeframes in step b)

- during operation, consecutive timeframes ($T^1$, $T^2$, $T^3$) are established, wherein, at any time, one of the respective timeframes is current and the log lines are assigned to the current timeframe immediately after they have been created, and/or
- the log lines are provided with a time stamp for their creation or the events assigned to them, wherein the log lines are assigned to the particular timeframe on the basis of the time stamp allocated to them.

4.   Method according to any of the preceding claims, **characterised in that**, in step d), log lines ($s_1$, ..., $s_n$) for a timeframe ($T^1$, $T^2$, $T^3$) in question are assigned to groups, which are each assigned to a chronologically, preferably immediately, preceding or subsequent timeframe ($T^1$, $T^2$, $T^3$),

5.   Method according to any of the preceding claims, **characterised in that**, in step e)

- the overlap ratio indicates how many log lines ($s_1$, ..., $s_n$) assigned to a group could be assigned to one or more other groups from chronologically adjacent, in particular immediately subsequent, timeframes ($T^1$, $T^2$, $T^3$) in step d), and/or
- the overlap ratio for two groups in different timeframes is specified as the ratio of reciprocal assignments of log lines in a group to other groups to the total existing assignments of log lines in these groups, and/or
- the overlap ratio for a plurality of selected groups in different timeframes is specified as the ratio of

     i) the reciprocal assignment of log lines in one of the selected groups to another selected group and
     ii) the total existing assignments of log lines in these selected groups.

6.   Method according to any of the preceding claims, **characterised in that**, in step f), in the event that there is a plurality of predecessor groups for a group and a plurality of paths are combined into one, for the further sequence of the path, the path, which is used as the predecessor path and continued,

- is the one for the groups, in particular the last group, with the joint subsequent group, which has the greatest overlap coefficients,
- is the one for the groups, in particular the last group, which has the most log lines,
- is the longest of the predecessor paths in question and/or the one that extends furthest back into the past.

7.   Method according to any of the preceding claims, **characterised in that**, in step f), in the event that a plurality of successor groups have been identified for a group and a path is divided into a plurality of paths, the path used as the successor path and/or the path continued with the successor path,

i) is the one for the groups, in particular the first group, with the joint group, which has the greatest overlap coefficients,
ii) is the one for the groups, in particular the first group, which has the most log lines,
iii) is the longest of the predecessor paths in question and/or the one that extends furthest back into the past.

8.   Method according to any of the preceding claims, **characterised in that**, as the indicator in step h), the number of log lines for a group, for which there are no equivalents in the preceding or subsequent groups, is used as the indicator measurement.

9.   Method according to any of the preceding claims, **characterised in that**, based on the sequences determined in step h) or the timeframe-related sum of selected indicators in step i)

- a time series forecast is obtained and a forecast interval for the probable sequence of the change measurement is determined in accordance with the chronologically latest timeframe, and
- the further chronological sequence of the indicator or the timeframe-related sum of selected indicators is assessed in accordance with the particular timeframe to determine whether it corresponds to the forecast and/or lies within the forecast interval determined and, should this not be the case, an abnormal state is identified in the computer network (1).

10.   Method according to claim 9, **characterised in that** the time series forecast is determined by means of an autoregressive integrated moving average model.

11.   Method according to any of the preceding claims, **characterised in that** a correlation is sought between the individual

# EP 3 528 162 B1

sequences of indicators and in the event that new correlations should occur or that previous correlations should no longer exist, an abnormal state is detected in the computer network (1).

12. Method according to any of the preceding claims, **characterised in that**, in step a), timeframes ($T^1$, $T^2$, $T^3$) are specified, which seamlessly adjoin each other and are, preferably, of equal length.

13. Method according to any of the preceding claims, **characterised in that**, in step c), each log line ($s_1$, ..., $s_n$) is only assigned to one group.

14. Method according to any of the preceding claims, **characterised in that**, in step d), the log lines ($s_1$, ..., $s_n$) for one of the timeframes ($T^1$, $T^2$, $T^3$) in question are assigned to groups, which are assigned to adjacent timeframes ($T^1$, $T^2$, $T^3$), using the similarity threshold values used in step c).

15. Data medium, on which a computer program for implementing a method according to any of the preceding claims, is stored.

## Revendications

1. Procédé de reconnaissance d'états de fonctionnement anormaux dans un réseau d'ordinateurs (1), lequel comprend plusieurs ordinateurs (1a, 1b, 1c), dans lequel

    - par les ordinateurs (1a, 1b, 1c) du réseau d'ordinateurs (1) ou par des processus (2a, 2b, 2c) se déroulant sur ces ordinateurs (1a, 1b, 1c), des protocoles sont respectivement établis,
    - par les ordinateurs (1a, 1b, 1c) ou par les processus (2a, 2b, 2c), lors de l'apparition d'événements prédéfinis, un ensemble de données de protocole est respectivement créé pour chacun de ces événements sous la forme d'une ligne de protocole ($s_1$, ..., $s_n$) et dans lequel chaque ligne de protocole ($s_1$, ..., $s_n$) comprend un ensemble de données de description (32a, 32b, 32c) pour l'événement protocolisé respectif, dans lequel

        a) des fenêtres temporelles ($T^1$, $T^2$, $T^3$) sont prédéfinies,
        b) les lignes de protocole ($s_1$, ..., $s_n$) sont respectivement associées à une fenêtre temporelle prédéfinie ($T^1$, $T^2$, $T^3$) en fonction du moment de leur création ou de leur traitement,
        c) les lignes de protocole ($s_1$,..., $s_n$) qui sont associées à une fenêtre temporelle respectivement considérée ($T^1$, $T^2$, $T^3$) sont analysées en ce qui concerne leur ressemblance et, en raison de leur ressemblance, sont rassemblées, selon une métrique prédéfinie et en spécifiant une valeur de seuil de ressemblance, dans des groupes séparés ($C^1_a$, $C^1_b$, $C^1_c$, $C^2_a$, $C^2_b$, $C^2_c$, $C^3_a$, $C^3_b$, $C^3_c$),
        d) les lignes de protocole ($s_1$,..., $s_n$) d'une fenêtre temporelle considérée respective ($T^1$, $T^2$, $T^3$) sont associées à des groupes qui sont associés à des fenêtres temporelles voisines respectives ($T^1$, $T^2$, $T^3$), en utilisant la métrique utilisée dans l'étape c),
        e) un nombre caractéristique de chevauchement est établi qui, sur la base des associations effectuées à l'étape d), indique une mesure du degré de correspondance entre les lignes de protocole de deux ou plusieurs groupes dans différentes fenêtres temporelles,
        f) en exploitant le nombre caractéristique de chevauchement établi, des groupes issus de fenêtres temporelles temporellement voisines ($T^1$, $T^2$, $T^3$) sont mutuellement associés, par

            - la découverte de groupes dont le nombre caractéristique de chevauchement excède une première valeur de seuil prédéfinie ($\theta$) et/ou
            - la découverte d'un certain nombre de groupes-successeurs dans une fenêtre temporelle subséquente pour un groupe-précurseur, dans lequel le nombre caractéristique de chevauchement entre chacun des groupes successeurs et le groupe précurseur excède une seconde valeur de seuil prédéfinie ($\theta_{part}$) et la somme des nombres caractéristiques de chevauchement qui dépassent la seconde valeur de seuil prédéfinie ($\theta_{part}$) dépasse une première valeur de seuil prédéfinie ($\theta$), et/ou
            - la découverte d'un certain nombre de groupes-précurseurs dans une fenêtre temporelle précédente ($T^1$, $T^2$, $T^3$) pour un groupe-successeur, dans lequel le nombre caractéristique de chevauchement entre chacun des groupes précurseurs et le groupe successeur excède une seconde valeur de seuil prédéfinie ($\theta_{part}$) et la somme des nombres caractéristiques de chevauchement qui dépassent la seconde valeur de seuil prédéfinie ($\theta_{part}$) dépasse une première valeur de seuil prédéfinie ($\theta$), et/ou
            - la découverte de groupes auxquels aucun groupe-précurseur ou groupe-successeur ne peut être associé, et

g) un graphe est établi, comprenant un certain nombre de chemins orientés qui comprennent des groupes comme nœuds et des arêtes comme associations et qui décrivent l'évolution de groupes mutuellement associés pendant un nombre prédéfini de fenêtres temporelles précédentes dans le temps, dans lequel les chemins individuels indiquent dans le graphe l'évolution de groupes mutuellement associés dans des fenêtres temporelles consécutives dans le temps, et

h) dans lequel, pour les chemins individuels, une évolution temporelle d'un indicateur est respectivement établie pour le groupe respectif pendant un nombre prédéfini de fenêtres temporelles,

dans lequel comme indicateur, une des grandeurs indicatrices suivantes est invoquée :

- la taille du groupe respectif,
- une mesure de la ressemblance moyenne des lignes de protocoles individuelles dans le groupe respectif,
- une mesure de la distance des lignes de protocoles du groupe par rapport aux lignes de protocole d'autres groupes,
- un indicateur qui est caractéristique de l'augmentation et/ou de la diminution de la taille du groupe respectif sur le chemin respectif,
- un indicateur qui est caractéristique du nombre de lignes de protocole pour lesquelles il n'y a aucun groupe ressemblant dans les groupes mutuellement associés respectifs, et

i) les évolutions des indicateurs sur les chemins individuels sont invoquées pour déterminer s'il y a un état anormal.

2. Procédé selon la revendication 1 **caractérisé en ce que** la longueur des fenêtres temporelles

- est établie, est adaptée de manière adaptative à la fréquence d'apparition des événements prédéfinis pour chacune des lignes de protocole ($s_1$, ..., $s_n$), ou
- est modifiée sur la base de règles, en fonction d'une métrique prédéfinie qui fournit un indicateur du nombre d'événements attendus dans le réseau d'ordinateurs (1), en particulier en fonction du moment de la journée et/ou du jour de la semaine et/ou de l'utilisation du réseau d'ordinateurs (1) et/ou du nombre d'utilisateurs connectés.

3. Procédé selon l'une des revendications 1 ou 2, **caractérisé en ce que**, pour associer les lignes de protocole individuelles aux fenêtres temporelles à l'étape b)

- pendant le fonctionnement, des fenêtres temporelles individuelles consécutives ($T^1$, $T^2$, $T^3$) sont définies, selon lequel à chaque instant une des fenêtres temporelles est actuelle et les lignes de protocole, immédiatement après leur création, sont respectivement assignées à la fenêtre temporelle actuelle, et/ou
- les lignes de protocole sont pourvues d'une estampille temporelle de leur création ou de l'événement qui leur est associé, selon lequel les lignes de protocole sont assignées à la fenêtre temporelle respective sur la base de l'estampille temporelle qui leur a été assignée.

4. Procédé selon l'une des revendications précédentes, **caractérisé en ce que** à l'étape d), des lignes de protocole ($s_1$,..., $s_n$) d'une fenêtre temporelle considérée respective ($T^1$, $T^2$, $T^3$) sont associées à des groupes qui sont associés à une fenêtre temporelle respective ($T^1$, $T^2$, $T^3$) temporellement, de préférence immédiatement, précédente ou subséquente.

5. Procédé selon l'une des revendications précédentes, **caractérisé en ce que** à l'étape e),

- le nombre caractéristique de chevauchement indique combien de lignes de protocole ($s_1$, ..., $s_n$) associées à un groupe pourraient, à l'étape d), être associées à un ou plusieurs autres groupes provenant de fenêtres temporelles ($T^1$, $T^2$, $T^3$) temporellement voisines, en particulier immédiatement consécutives, et/ou
- le nombre caractéristique de chevauchement pour deux groupes, dans des fenêtres temporelles différentes, est indiqué comme le rapport entre les associations mutuelles de lignes de protocole d'un groupe à d'autres groupes respectifs et l'ensemble des associations de lignes de protocole existantes de ces groupes, et/ou
- le nombre caractéristique de chevauchement pour plusieurs groupes sélectionnés dans des fenêtres temporelles respectives différentes est indiqué comme le rapport entre

i) les associations mutuelles de lignes de protocole d'un des groupes sélectionnés à un autre groupe sélectionné respectif et
ii) l'ensemble des associations de lignes de protocole existantes de ces groupes sélectionnés.

6. Procédé selon l'une des revendications précédentes, **caractérisé en ce que** à l'étape f), dans le cas où, pour un groupe, plusieurs groupes-précurseurs seraient disponibles et plusieurs chemins seraient réunis en un seul, pour l'évolution ultérieure du chemin, est invoqué et poursuivi comme chemin-précurseur, celui

- dont les groupes, en particulier dont le dernier groupe, présentent les coefficients de chevauchement les plus grands avec le groupe commun suivant,
- dont les groupes, en particulier dont le dernier groupe, présentent le plus grand nombre de lignes de protocole,
- qui, parmi les chemins-précurseurs entrant en ligne de compte, est le plus long et/ou s'étend le plus loin dans le passé.

7. Procédé selon l'une des revendications précédentes, **caractérisé en ce que**, à l'étape f), dans le cas où, pour un groupe, plusieurs groupes-successeurs seraient trouvés et un chemin serait partagé en plusieurs chemins, est invoqué comme chemin-successeur celui et/ou le chemin est poursuivi avec le chemin-successeur

i) dont les groupes, en particulier dont le premier groupe, présentent les coefficients de chevauchement les plus grands avec le groupe commun,
ii) dont les groupes, en particulier dont le premier groupe, présentent le plus grand nombre de lignes de protocole,
iii) qui, parmi les chemins-précurseurs entrant en ligne de compte, est le plus long et/ou s'étend le plus loin dans le passé.

8. Procédé selon l'une des revendications précédentes, **caractérisé en ce qu'**est invoqué comme indicateur à l'étape h), le nombre de lignes de protocole d'un groupe pour lequel, dans le groupe suivant ou le groupe précédent respectif, aucune correspondance n'existe comme mesure indicatrice.

9. Procédé selon l'une des revendications précédentes, **caractérisé en ce que**, sur la base des évolutions d'indicateurs établies à l'étape h) ou de la somme d'indicateurs sélectionnés établie par fenêtre temporelle à l'étape i)

- une prévision de série chronologique est établie et un intervalle de prévision pour l'évolution probable de la mesure de variation après la fenêtre temporelle la plus tardive temporellement est établi, et
- l'évolution temporelle ultérieure de l'indicateur ou de la somme d'indicateurs sélectionnés établie par fenêtre temporelle après la fenêtre temporelle respective est examinée quant à sa correspondance avec la prévision et/ou son appartenance à l'intervalle de prévision établi, et dans le cas où ce ne serait pas le cas, un état anormal dans le réseau d'ordinateurs (1) serait constaté.

10. Procédé selon la revendication 9, **caractérisé en ce que** la prévision de série chronologique est établie au moyen d'un Autoregressive Integrated Moving Average-Model.

11. Procédé selon l'une des revendications précédentes, **caractérisé en ce que** des corrélations entre les évolutions individuelles d'indicateurs sont recherchées et dans le cas où de nouvelles corrélations apparaîtraient, ou dans le cas où des corrélations préalablement existantes n'existeraient plus, un état anormal dans le réseau d'ordinateurs (1) serait constaté.

12. Procédé selon l'une des revendications précédentes, **caractérisé en ce que** dans l'étape a), des fenêtres temporelles ($T^1$, $T^2$, $T^3$) sont prédéfinies, qui sont consécutives l'une à l'autre et de préférence de la même longueur.

13. Procédé selon l'une des revendications précédentes, **caractérisé en ce que** dans l'étape c), chaque ligne de protocole ($s_1$,..., $s_n$) n'est chaque fois associée qu'à un seul groupe.

14. Procédé selon l'une des revendications précédentes, **caractérisé en ce que** dans l'étape d), les lignes de protocole ($s_1$,..., $s_n$) d'une fenêtre temporelle considérée respective ($T^1$, $T^2$, $T^3$) sont associées à des groupes qui sont associés à des fenêtres temporelles voisines respectives ($T^1$, $T^2$, $T^3$), en utilisant la valeur de seuil de ressemblance utilisée dans l'étape c).

15. Support de données, sur lequel un programme informatique est mémorisé pour exécuter un procédé selon l'une

des revendications précédentes.

Fig. 1

Fig.2

EP 3 528 162 B1

Fig. 3

Fig. 9

Fig.4

EP 3 528 162 B1

Fig. 5

Fig. 6

Fig.7

Fig. 8a

Fig. 8b

Fig. 8c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3267625 A

- US 2017344415 A

**In der Beschreibung aufgeführte Nicht-Patentliteratur**

- **M. WURZENBERGER ; F. SKOPIK ; R. FIEDLER ; M. LANDAUER ; P. GREITBAUER ; W. KASTNER.** Incremental Clustering for Semi-Supervised Anomaly Detection applied on Log Data. *International Conference on Availability, Reliability and Security Proceedings,* 2017

- **AGRAWAL, R. ; GEHRKE, J. ; GUNOPULOS, D. ; RAGHAVAN, P.** Automatic subspace clustering of high dimensional data for data mining applications. ACM, 1998, vol. 27, 94-105

- MAFIA: Efficient and scalable subspace clustering for very large data sets. **GOIL, S. ; NAGESH, H. ; CHOUDHARY, A.** Proceedings of the 5th ACM SIGKDD International Conference on Knowledge Discovery and Data Mining. ACM, Juni 1999, 443-452

- CACTUS-clustering categorical data using summaries. **GANTI, V. ; GEHRKE, J. ; RAMAKRISHNAN, R.** Proceedings of the fifth ACM SIGKDD international conference on Knowledge discovery and data mining. ACM, August 1999, 73-83

- Fast algorithms for projected clustering. **AGGARWAL, C. C. ; WOLF, J. L. ; YU, P. S. ; PROCOPIUC, C. ; PARK, J. S.** ACM SIGMoD Record. ACM, Juni 1999, vol. 28, 61-72

- **VAARANDI, R.** A data clustering algorithm for mining patterns from event logs. *Proceedings of the 2003 IEEE Workshop on IP Operations and Management (IPOM),* Oktober 2003, 119-126

- **D. GREENE ; D. DOYLE ; P. CUNNINGHAM.** Tracking the Evolution of Communities in Dynamic Social Networks. *International Conference on Advances in Social Networks Analysis and Mining,* 2010, 176-183

- **M. TOYODA ; M. KITSUREGAWA.** Extracting Evolution of Web Communities from a Series of Web Archives. *Proceedings of the Fourteenth ACM Conference on Hypertext and Hypermedia,* 2003, 28-37

- **J. CRYER ; K. CHAN.** Time Series Analysis: With Applications in R. *Springer Texts in Statistics,* 2008